# EUROPEAN PATENT SPECIFICATION

(11) **EP 0 507 034 B1**
(45) Date of publication and mention of the grant of the patent: **20.09.1995**
(21) Application number: 91311834.5
(22) Date of filing: 19.12.1991
(51) Int. Cl.: B63B 3/20, B63B 3/22, B63B 3/12, B63B 9/06

(54) **Vessel hull structure and method**
Schiffsrumpfstruktur und -verfahren
Structure et méthode pour une coque de bateau

(30) Priority: 01.04.1991 US 678802
(43) Date of publication of application: 07.10.1992
(60) Divisional application: 94119188.4
(73) Proprietor: METRO MACHINE CORPORATION, Norfolk, Virginia 23501 (US); MARINEX INTERNATIONAL INC., Hoboken, New Jersey 07030 (US)
(72) Inventor: Goldbach, Richard A., Norfolk, Virginia 23517 (US); Salzer, Richard, Sugar Land, Texas 77448 (US); McConnell, Frank E., Norfolk, Virginia 23517 (US)
(74) Representative: Laight, Martin Harvey

(56) References cited:
- WO-A-87/02086
- FR-A- 2 443 897
- FR-A- 2 483 877
- GB-A- 126 760
- GB-A- 2 143 783
- US-A- 2 353 260
- US-A- 4 638 754

## Description

The present invention relates to a method of fabricating a module structure for a vessel, and to such a module structure. In the Applicant's copending application No. 91304788, EP-A-0460851 there is disclosed apparatus and a method for constructing a novel double-hulled product, which as panels, modules and midbodies, are useful in the construction of vessels, in particular, bulk carriers for crude oil and other products.

The present invention relates to improvements in the method and products disclosed in the above-identified, earlier application, the contents of which are incorporated herein by reference.

In general, the invention relates to providing a double-hulled vessel which, compared with conventional constructions, is made with a reduced number of different pieces, a reduced complexity, which can be fabricated using a higher degree of automation, which, in many applications is more durable and/or needs less maintenance, and need not cost the 20 percent additional that a conventional double hull costs compared with a conventional single hull. In fact, in some instances, a double hull produced in accordance with the invention can successfully compete in price with a conventional single hull for the same duty and carrying capacity.

Compared with the apparatus, method and products disclosed in the above-mentioned, earlier patent application EP-A-0460851, the present invention relates to a different method of assembling the plates into product components and protectively coating (i.e., "painting") the components.

As a result of a 1970's convention entered into by the major maritime shipping nations (the "MARPOL Convention"), bulk petroleum carrier ships must have separate tanks for ballast and cargo oil. Ships thereupon necessarily became larger in overall size for carrying the same amount of cargo. Fewer bulk petroleum carrier ships were built to this requirement than had been built to serve the same market within a comparable prior period. Also, new and aggressively expanding factors in the bulk cargo vessel field sought to capture market share by cutting out what they deemed excess weight in the construction of hulls for such vessels. Part of the reduction was accomplished by using high tensile strength steel, but some was accomplished by reducing the safety margin in the thickness, spacing and redundancy of constructional elements conventionally provided to accommodate loss of strength due to corrosion occurring during the expected life of the vessel. At the same time, carrying only ballast in certain tanks of the vessel, due to requirements of the MARPOL Convention, caused accelerated corrosion. The need for better coatings was not recognized soon enough; therefore, it is now believed that many bulk cargo-carrying ships built within the last 15 years will have unpredictably short useful lives.

A conventional double-hull tanker lets ballast be carried between hulls. Such a ship does not need to be any larger, overall, than a conventional single-hull, segregated-ballast tanker.

It is conventional to blast-clean and coat the surfaces of ballast tanks upon construction, and thereafter, once each 5 years. Currently, sand or mineral abrasive is used for the abrasive in blast cleaning the tank surfaces, and solvent-based paints are used for originally coating, and recoating them.

Although several coatings manufacturers are believed to be experimenting with water-based, marine paints, it is problematical whether and when such paints will become commercially available and displace solvent-based paints from the marketplace.

Workers at shipyards are becoming less willing to work in a confined space with sand-blasting equipment and with apparatus for applying solvent-based paints.

Coating a vessel results in the generation of refuse, such as empty paint drums, which often must be disposed of as hazardous waste. A painting system which uses less paint (e.g., only about 20 percent as much paint as conventional), potentially reduces the bulk of refuse needing to be disposed of as hazardous waste.

Recent changes to air quality legislation (the Clean Air Act), give certain industrial users no more than 10 years to solve problems of air quality resulting from paint overspray, and release of volatile organic compounds into the air, as solvents evaporate from coatings.

Accordingly, there is a present need in the marketplace, both from an environmental standpoint and from a work force contentedness standpoint of a painting system which provides a longer lasting coating in the specific environment.

Good coating requires cleaning of the surface that is to be coated immediately prior to applying the coating thereto. However, if a coating is applied to components early in a fabrication process, portions of it may be destroyed later by welding and cutting of structure and temporary fitting and holding devices used in the course of constructing a hull.

There is a trend in industrial coatings, particularly in consumer products, towards greater use of cathodic application of epoxy material. Certain cathodic epoxy paints are known to have the capability of providing good protection against both oil and salt water. A conventional marine coating typically survives 400 to 500 hours in a salt spray (accelerated corrosion) test, whereas cathodic epoxy coatings, particularly which recently have become commercially available from PPG Coatings, can survive 2000 hours in the salt spray test. In applying such a coating, the part is shot-blasted, then cleaned, finished and provided corrosion protection through a chemical wash and pretreatment process of three stages or more, and then dipped into a bath of paint particles and water, with the part serving as a cathode causing the paint particles to "plate" onto its surfaces. The coated part is then dried using infrared energy sources at approximately 350°F. Usually, this dip-and-dry process is repeated one or more times, after which the coated part is inspected for integrity of the coating. Parts which pass are considered completed; those which do not, are recycled for remedial coating. This process is believed to be presently in commercial use for coating outboard motors for boats.

Conventionally, fuel oil for powering the engines which propel a tanker is stored in deep tanks at the ends of the vessel. In these locations, the vessel fuel oil sometimes is located where it could easily spill, were the vessel hull to become ruptured in an accident. Accordingly, there is a need for a hull construction system which potentially can provide for storage of vessel fuel oil within closed bays of a double deck, remote from the danger of tank rupture and oil spillage.

It is believed that in the period from 1990 to 2010, the number of tankers requiring replacement or re-midbodying, assuming modest expansion of world fleet requirements, an average vessel life of 25 years, and an average vessel size of 85,000 DWT, is about 180 to 200 tankers per year.

US-A-4638754 (Tornay) discloses a method of producing a double-hulled vessel using a combination of flat and curved plates. GB-A-2143783 (Hitachi) discloses a double hulled vessel structure. Both specifications describe conventional welding construction techniques and neither specification describes the steps of painting the panels, in relation to the welding steps.

The above mentioned patent application EP-A-0460851 in the name of the present applicant was published on 11th December 1991, after the priority date of 1st April 1991, of the present application. The previous patent application EP-A-0460851 discloses a method of fabricating a module structure for a double-hulled vessel, comprising the steps of providing a plurality of stiffened flat plate panels and a plurality of further plate panels, vertically disposing the panels in a fixture having an array of upstanding towers fixed on a foundation, supporting the panels in the fixture, welding joints between side edges of the panels to unit the panels into a double hull module subassembly, and removing support of the fixture from the panels of the subassembly. In the previous method, the tops and bottoms of the panels are coated with a first primer coat of paint before placing in the fixture, but several inches along each edge are left unpainted to facilitate future welding. After welding, the subassembly is transferred to a paint facility, in which the welded areas are shot blasted and paint spray nozzles provide full surface coverage.

In accordance with the present invention in a first main aspect there is provided a method of fabricating a module structure for a double-hulled vessel, comprising: (a) providing a plurality of flat plate panels; (b) providing a plurality of further plate panels; (c) mounting stiffener plates to said flat plate panels to provide a plurality of stiffened flat plate panels; (d) providing each said further plate panel and each stiffened flat plate panel with an all-over, cured protective coating to provide respective painted panels; (e) providing a fixture as an array of upstanding towers fixed on a foundation; (f) vertically disposing in said fixture, among said towers, a first plurality of said painted further plate panels; (g) vertically disposing in said fixture, among said towers, a second plurality of said painted further plate panels; (h) vertically disposing in said fixture a plurality of said painted stiffened flat plate panels; (i) supporting said panels in said fixture; (j) welding joints between side edges of said panels to unite said panels into a double-hull module subassembly; (k) removing support of said fixture from said panels of said subassembly; and (l) repairing damage caused in step (j) to said cured coating.

In accordance with the invention in its broadest aspect, the term "painted" includes any form of protective coating applied to components used in the fabrication of a module structure for a double-hulled vessel.

The present invention differs from the disclosure of the prior co-pending patent application EP-A-0460851 in that each further plate panel and each stiffened flat plate panel is provided with an all-over, cured protective coating to provide respective painted panels, the painted further plate panels and the painted stiffened flat plate panels are disposed vertically in the fixture and are supported and welded, and thereafter the step is provided of repairing damage caused in the welding step to the cured coating of the painted panels.

Preferably said further plate panels are curved plate panels.

In preferred forms of the invention, it may be arranged that:-
step (a) comprises providing said plurality of flat plate panels, with each being elongated rectangular in outer perimetrical shape so as to have two opposite side edges, two opposite end edges, and two opposite flat faces;
step (b) comprises providing said plurality of further plate panels, with each being elongated rectangular in outer perimetrical shape so as to have two opposite side edges, two opposite end edges and two opposite correspondingly generally cylindrically arcuately curved faces, so that each curved plate panel is concave in one direction and convex in an opposite direction about an axis parallel to said side edges; and
step (c) comprises mounting a longitudinally extending series of transversally extending stiffener plates to at least one face of each flat plate panel, so as to provide said plurality of stiffened flat plate panels.

Also in preferred forms of the invention it may be arranged that
step (f) comprises vertically disposing in said fixture, among said towers, said first plurality of said painted further plate panels, arranged in a first series, in which individual ones of these panels spacedly adjoin one another, side edge to side edge, with respective gaps between them, in a single layer;
step (g) comprises vertically disposing in said fixture, among said towers, said second plurality of said painted further plate panels, arranged in a second series, in which individual ones of these panels spacedly adjoin one another side edge to side edge, with respective gaps between them, in a single layer, so that gaps between panels in said second series are substantially in registry with gaps between panels in said first series, thicknesswise of said fixture;
step (h) comprises vertically disposing in said fixture said plurality of said painted stiffened flat plate panels arranged in a series, in which one side edge of each painted stiffened flat plate panel adjoins a respective said gap in said first series of painted further plate panels and an opposite side edge thereof adjoins a respective said gap in each said second series of painted further plate panels;
step (i) comprises supporting said panels in each of said series of panels with respect to respective ones of said towers of said fixture;
step (j) comprises welding joints between and among respective ones of said panel side edges in respective ones of said gaps, thereby filling said gaps and uniting said panels in said fixture into a double-hull module subassembly having a plurality of longitudinally extending cells of generally rectangular transverse cross-sectional shape and two laterally opposite ends where side edges of respective terminal ones of said painted further plate panels are available;
step (k) comprises removing support of said fixture from said panels of said subassembly and removing said subassembly from said fixture; and
step (l) comprises repairing damage caused in step (j) to said cured coating of paint both externally of said subassembly and internally of said cells, at internal corners of respective ones of said cells.

Preferably the method further comprises:- (m) replicating steps (a)-(1) to provide a plurality of said subassemblies; and (n) weldingly joining a plurality of said subassemblies, at respective said side edges of respective terminal ones of said painted further plate panels, to thereby provide a laterally continuous, tubular module having two longitudinally opposite ends. Preferably step (n) further includes providing a transversally extending bulkhead and weldingly assembling each subassembly, at one end thereof, perimetrically around said bulkhead while weldingly joining said subassemblies to one another, so that each module has a transverse bulkhead provided at one end thereof.

Also preferably, the method further includes:- (o) replicating steps (m) and (n) to provide a plurality of modules, each having a transverse bulkhead provided at one end thereof; and (p) weldingly joining a succession of said modules to one another end to end in a longitudinally extending series, to thereby provide a double-hulled tanker longitudinal midbody having two opposite ends. Also preferably the method further includes joining a vessel bow section to one end of said longitudinal midbody and a vessel stern section to an opposite end of said longitudinal midbody, to thereby provide a double-hulled vessel.

In accordance with other preferred features, it may be arranged that step (a) comprises providing a plurality of raw flat plates of steel, and flame-cutting said plates to edge-trim them and thereby provide said flat plate panels. Step (b) may comprise providing a plurality of raw flat plates of steel, bending said raw flat plates about a longitudinal axis to provide curvature thereto, and flame-cutting the resultingly curved raw plates to edge-trim them and thereby provide said curved plate panels. In preferred form it may be arranged that, as a precursor to step (c) each face of a flat plate panel which is to have at least one stiffener plate mounted thereto is cleaned in a respective path extending transversally along each such face; and in step (c), a respective stiffener plate (60) is welded edgewise onto a respective said face of a respective said flat plate panel, on a respective said cleaned path. Preferably each said cleaned path is provided by grinding a respective band of the respective said face of the respective said flat plate panel. Also preferably in step (b), said bending is accomplished by coordinately pressing each respective raw flat plate against a convex die using a plurality of coordinatingly moved concavely curved press platens.

Conveniently it may be arranged that step (i) comprises jacking against and locking portions of respective ones of said panel faces with jacking elements mounted to said towers. Also conveniently step (j) comprises electrogas welding said joints using an upwardly travelling welding head while supporting respective panel edge margins at respective gaps between panels, while welding the respective joint, using a plurality of backing bars pressed into respective gap corners. The said backing bars may be releasably pressed into respective gap corners by supporting each backing bar from a respective said tower using a laterally reversibly expansible support device. Each laterally reversibly expansible support device may be releasibly pressed into a respective gap corner by internally fluid-pressurising a resilient-walled chamber thereof.

In a preferred form, each said panel is cleaned and then cathodically coated with epoxy paint. In a preferred form, said epoxy paint is cathodically coated onto said cleaned panels from a bath containing particles of said paint, in which each said cleaned panel is immersed at least once, followed by being subjected to a paint-curing treatment at least once.

It is to be appreciated that where features of the invention have been described with reference to a method of fabricating a module structure for a double-hulled vessel, these features may also be provided in a structure according to the invention. In particular, there may be provided a subassembly, or a module, or a longitudinal midbody, or a double-hulled vessel, produced in accordance with any of the aspects of the method set out above.

In particular, there may also be provided in accordance with the present invention a sub-assembly for a double-hulled vessel, comprising: a plurality of flat plate panels; and a plurality of further plate panels; a first plurality of said further plate panels being arranged in a first series, in which individual ones of these panels adjoin one another, side edge to side edge in a single layer; a second plurality of said further plate panels being arranged in a second series, in which individual ones of these panels adjoin one another, side edge to side edge in a single layer; and a plurality of said flat plate panels being arranged in a series positioned between the first plurality of said further plate panels and the second plurality of said further plate panels; characterised in that each flat plate panel has stiffener plates mounted to at least one face thereof, so as to provide a plurality of stiffened flat plate panels; said first series of further plate panels being arranged with individual ones of these panels spacedly adjoining one another, side edge to side edge, with respective gaps between them; and said second series of further plate panels being arranged with individual ones of these panels spacedly adjoining one another side edge to side edge, with respective gaps between them, in such a manner that gaps between panels in said second series are substantially in register with gaps between panels in said first series; said series of stiffened flat plate panels being arranged with one side edge of each stiffened flat plate panel adjoining a respective said gap in said first series of further plate panels and an opposite side edge thereof adjoining a respective said gap in each said second series of further plate panels; and there being provided welded joints between and among respective ones of said panel side edges in respective ones of said gaps, filling said gaps and uniting said panels in a double-hull module sub-assembly; said module structure having a first coating comprising an all-over, cured protective coating extending over said panels up to said welded joints, and a second coating comprising a touch-up cured protective coating extending over said welded joints, said second touch-up, cured protective coating overlapping said first all-over, cured protective coating in the region of said side edges of said panels.

Yet further preferred, and/or optional features will now be set out in accordance with some aspects of the invention. It is particularly to be appreciated that the following statements relate only to preferred or optional or exemplary features, and do not set out essential features of the invention:

An improved curved-plate, double-hull tanker construction is provided, having reduced or eliminated transverse reinforcing structure in its midbody, except for bulkheads. The hull, though double, can compare in weight to conventional single hulls, despite being entirely made of mild steel plate. It is made of significantly fewer pieces, with a reduction in welding footage. More of the steel is used in the form of plate, rather than more expensive shapes. Improved productivity is possible, resulting form standarization of parts, less scrap, greater use of jigs and fixtures, automated welding, blast-cleaning and painting, so that not so much staging is needed, the work environment can be safer, and the product can be produced at a lower unit labor cost. Preferably, cathodic epoxy painting is used for durability and reduction in problems due to blast cleaning, solvent evaporation and generation of refuse. Extending the double-hull structure from the bottom and sides of the hull to the main deck can provide space for fuel oil to be located safely away from the skin of the ship, rather than in possibly vulnerable deep tanks at the stern. The constructional technique is believed to be applicable to vessel hulls in the 70,000 DWT to 300,000 DWT range. The vessel hull midbody module subassemblies may be assembled into modules, hull midbodies and vessels using the method and apparatus disclosed in the aforementioned application EP-A-0460851.

Embodiments of the invention will now be described by way of example with reference to the accompanying drawings in which:-
Figure 1 is a fragmentary schematic top plan view of a facility for fabricating steel plate into subassemblies of modules for double-hull, bulk-carrier (e.g., VLCC) vessel hull midbodies, according to the present invention;
Figure 2 is a fragmentary pictorial perspective view of a station on the line shown in Figure 1, for offloading incoming steel plate from rail cars onto the line, or into storage;
Figure 3 is a fragmentary pictorial perspective view of apparatus on the line for flame cutting the steel plate into pieces of required configuration for use in fabricating the double-hull module subassemblies;
Figure 4 is a fragmentary pictorial perspective view of apparatus on the line for fabricating the cut plate into curved (at the left) and stiffened flat (at the center and right) panels that will later be assembled with one another to create the module subassemblies;
Figure 5 is a schematic top plan view of a press assembly for producing the curved plates;
Figure 6 is an end view of the press assembly of Figure 5, showing the assembly about to be closed on a piece of plate stock for press-forming a curved panel therefrom;
Figure 7 is an enlarged scale end view of a portion of the press assembly of Figure 6, showing a retractable means for conveying an edge of the plate stock at the hinge side of the press assembly;
Figure 8 is a front elevation view of a station for surface preparation of flat panel by grinding a succession of clean stripes on a surface so that respective stiffeners can be placed thereon and welded thereto;
Figure 9 is a larger scale fragmentary elevation view of the surface preparation station shown in Figure 8;
Figure 10 is a fragmentary cross-sectional view on line 10-10 of Figure 9;
Figure 11 is a fragmentary pictorial perspective view showing a repair station on the line, for stiffened panels, and a station for surface preparation and coating of both curved and stiffened flat panels;
Figure 12 is a fragmentary pictorial perspective view showing a fixture (shown empty) for receiving the coated curved and stiffened flat panels which are to be joined at respective edges to form a subassembly for a module of a double-hull midbody for a bulk cargo vessel;

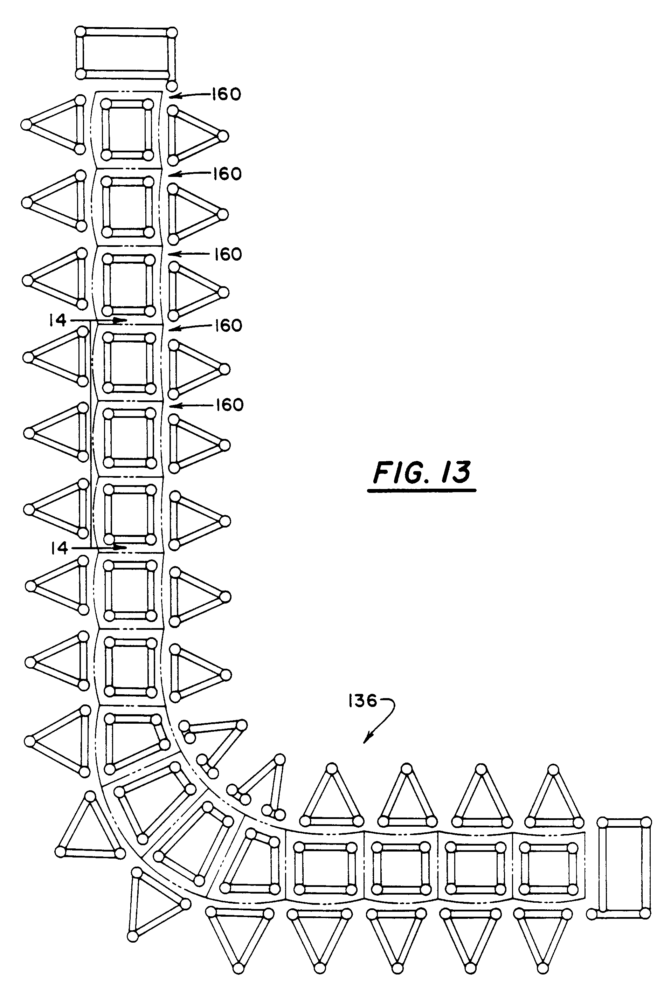

Figure 13 is a diagrammatic top plan view of the fixture of Figure 12;

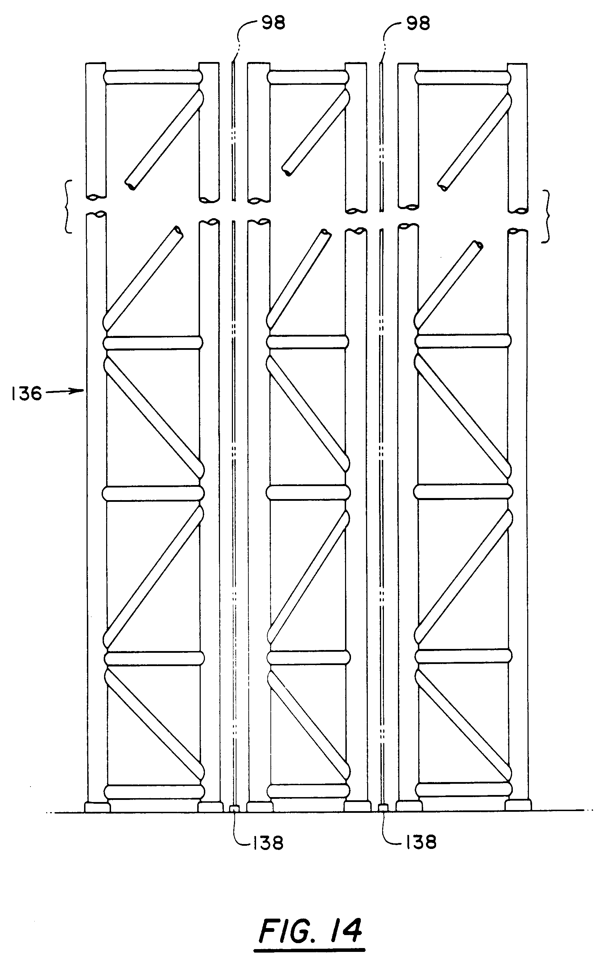

Figure 14 is a fragmentary vertical longitudinal sectional view on line 14-14 of Figure 13, showing two flat panels lowered into place in the fixture of Figure 12;
Figure 15 is a fragmentary pictorial perspective view showing one coated, curved plate being lowered into place in the fixture of Figure 12;
Figure 16 is an enlarged scale fragmentary top plan view of the fixture of Figure 12 after a complete set of flat and curved panels has been lowered into place and devices that will be further explained with reference to Figures 17-22 have been activated for holding the panels in place for welding of edge joints between respective adjoining edges of respective panels;
Figure 17 is a even larger scale fragmentary top plan view of part of the structure shown in Figure 16;
Figure 18 is a horizontal transverse sectional view of one leg element of one tower of the fixture of Figure 12, showing the stationary tube of one manual activating mechanism for a flat panel, and, in elevation, the extensible, latchable member of that manual activating mechanism;
Figure 19 is a fragmentary elevational view, partly in section, one of the manually activating devices used for aligning top edges of respective ones of the curved and flat panels in the fixture of Figure 12;
Figure 20 is a fragmentary top plan view of one of the activating mechanisms used for removing local unfairness of respective ones of the curved and flat panels disposed in the fixture of Figure 12;
Figure 21 is a fragmentary side elevation view of the activating mechanism of Figure 20;
Figure 22 is a top plan view showing how two curved panels and one flat panel are supported in the fixture of Figure 12 at an adjacent the site where a three-edge T-joint will be welded, in particular showing where pressure is applied by respective fairing aids of Figures 20 and 21, and respective copper backing bars of Figures 23-28;
Figure 23 is an enlarged scale horizontal transverse cross-sectional view of one copper backing bar and an actuator therefor;
Figure 24 is a fragmentary side elevation view of the structure shown in Figure 23;
Figure 25 is a fragmentary pictorial elevational view showing electrogas welding of a T-joint among adjacent edges of two coated curved panels and one coated stiffened flat panel, all as held in the fixture of Figure 12;
Figures 26, 27 and 28 are fragmentary horizontal transverse cross-sectional views of respective portions of subassembly being fabricated in the fixture of Figure 12, showing the plate edges, copper backing bars and copper sliding shoes at sites where three different types of joint configurations are being welded for respective portions of the double-wall vessel hull module subassembly;
Figure 29 is a fragmentary pictorial perspective view showing a module subassembly being removed from the fixture of Figure 12 following completion of welding of the welded joints which interconnect the various curved and flat panels along their respective edges;
Figure 30 is a fragmentary pictorial perspective view showing the fixture of Figure 12, an adjacent facility used for surface preparation and touch-up coating of the subassembly for repairing damage to the coating earlier provided on the panels caused by the electrogas welding depicted in Figure 25 (including the adjoining crane of Figures 12 and 15, that was used for lowering curved and flat panels into the fixture), and a surface preparation and coating touch-up facility for the subassembly, which is brought thereto by the floating crane of Figure 29;
Figure 31 is a fragmentary pictorial perspective view, partly broken away for showing the interior of a subassembly cell, illustrating surface preparation and touch-up coating of the interior walls of the cell;
Figure 32 is a fragmentary pictorial perspective view showing the locations of two adjacent stations for assembly of respective transverse bulkheads, and a set of module subassemblies being assembled onto a transverse bulkhead at one of these stations, for creating a module for a midbody of a double-hulled vessel;
Figure 33 is a fragmentary diagrammatic end view of a completed module at an open end;
Figure 34 is a fragmentary diagrammatic end view of a completed module at an end closed by a transverse bulkhead;
Figure 35 is a fragmentary vertical longitudinal sectional view of the module of Figures 33 and 34, showing a typical shape and position for a transverse bulkhead;
Figure 36 is a fragmentary pictorial perspective view showing initiation of a step of lowering a completed module from the assembly area of Figures 32-35 into the water;
Figures 37-41 schematically show successive steps in tilting over the floating module, from the vertical orientation in which it was fabricated and assembled, to a horizontal orientation, for joining in series with others, to provide a vessel midbody;
Figures 42 and 43 are, respectively, fragmentary side elevational and top plan views of a facility in which modules are successively joined to create a vessel midbody;
Figure 44 is a diagrammatic perspective view thereof (with the water omitted);
Figure 45 is a larger scale fragmentary vertical transverse sectional view of the facility of Figures 42-44, at the location where one end of one module is being welded to an abutting end of a previously placed module;
Figure 46 is a fragmentary top plan view of the left side of the structure shown in Figure 45; and
Figure 47 is a side elevational view of a VLCC having a midbody constructed in accordance with the principles of the present invention, conventionally joined with a conventional bow section and stern section.

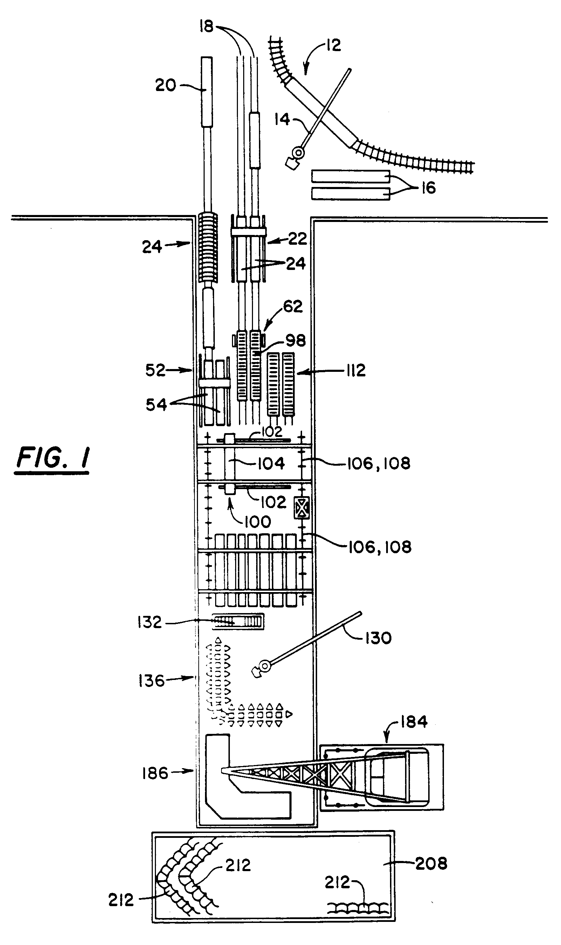

Referring first to Figure 1, a facility for transforming steel sheets into subassemblies for modules for double-hulled longitudinal midbodies of bulk cargo carriers is shown at 10.

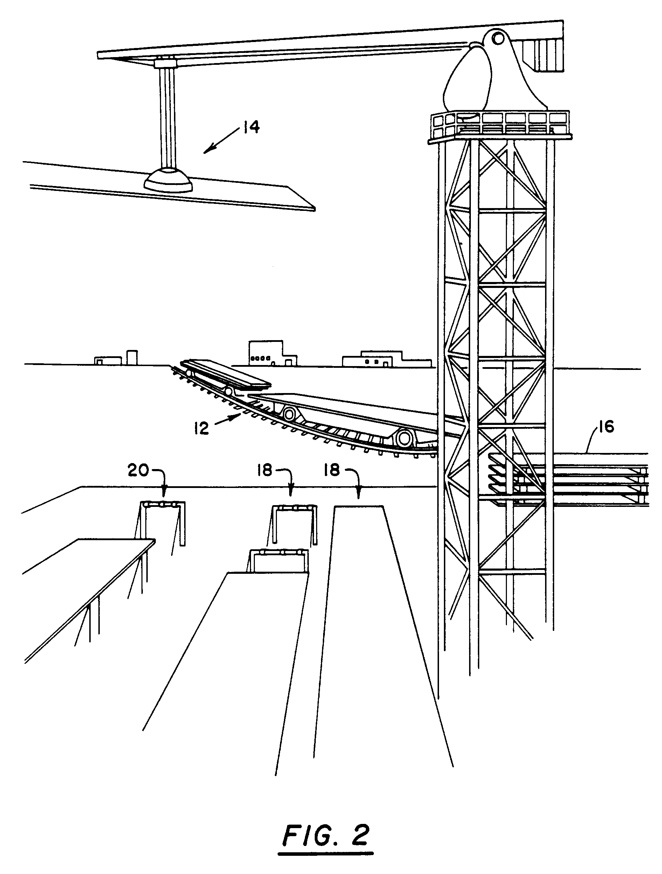

Raw steel plate, typically 0.5 to 1.25 inch thick and approximately 8 feet wide and 50 feet long, procured from a steel mill, is received by rail car 12 (Figures 1 and 2), lifted off by an electromagnet-type grasping device-equipped crane 14 and placed either in storage 16, on one of two conveyor lines 18 feeding flat panel fabrication, on a rail car with an installed conveyor called a collocator car (not shown), or on a conveyor line 20 feeding curved panel fabrication.

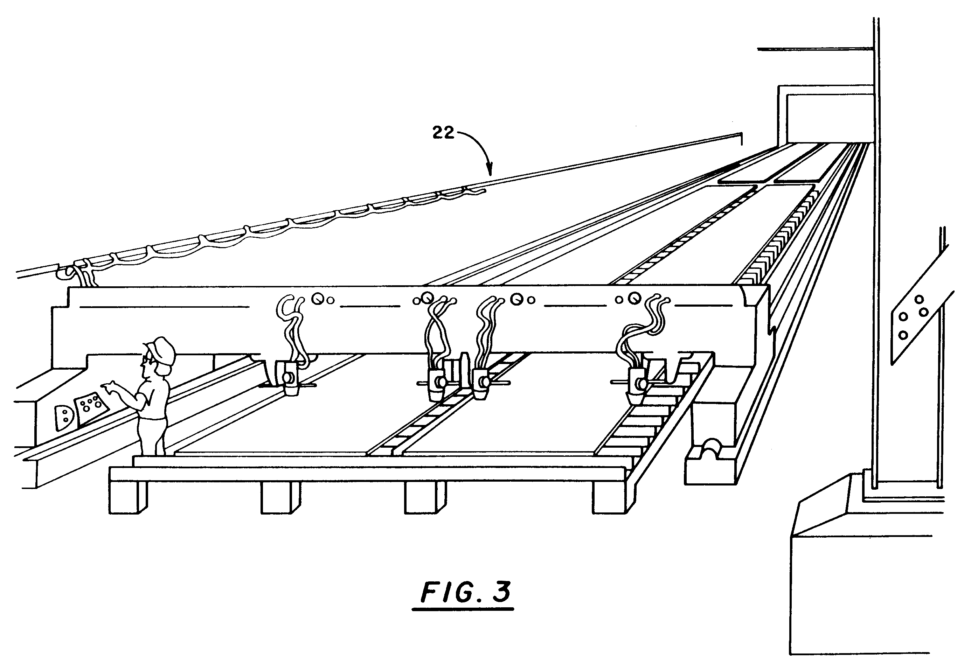

Raw steel plate destined for stiffened flat panels is conveyed on the lines 18 to an automatic burning machine 22 (Figures 1, 3 and 4) where it is cut to final configuration, including any lightening holes (not shown, but see the Cuneo et al. application) to provide flat steel plates 24.

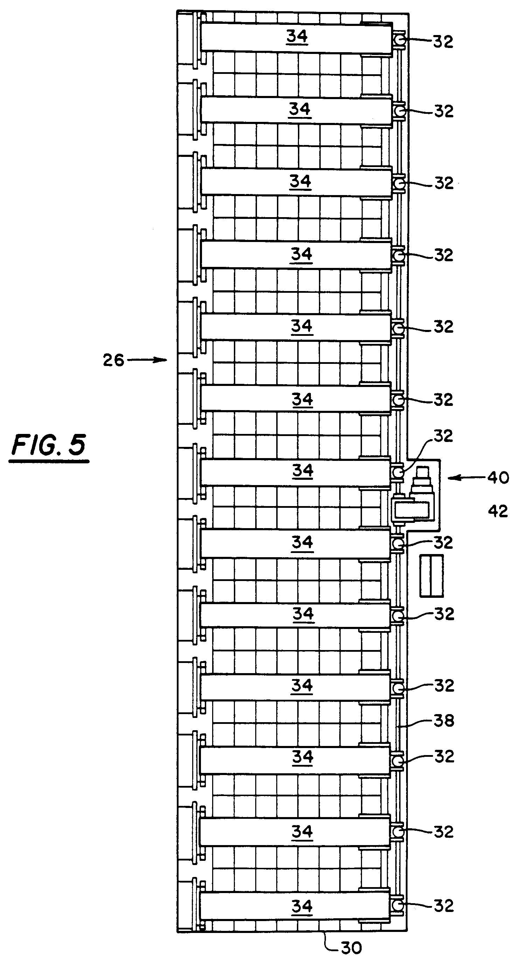

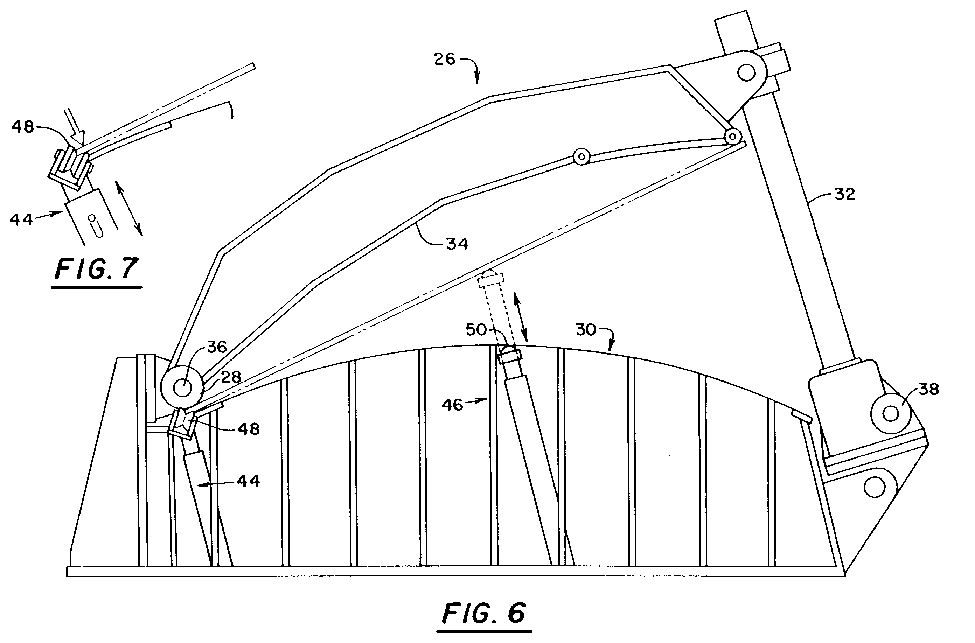

Raw steel plate destined for curved panels is conveyed on the line 20 to the plate forming machine 26 (Figures 1 and 5-7), preferred details of which are shown in Figures 5-7, to produce curved steel plates.

The plate forming machine 26 puts a constant radius curve in a succession of steel plates each approximately 8 feet wide and 50 feet long by holding one longitudinal edge of a raw steel plate in a holder 28 and bending the plate along its transverse axis over an upwardly convex stationary die 30 using a series of hydraulically operated screw jacks 32 attached to a series of downwardly concave forming presses 34. The screw jacks 32 of the preferably forming presses 34, hinged at 36 to the stationary base at an edge of the stationary die 30 are operated simultaneously by a common shaft 38 driven by a hydraulic power plant 40 through a reduction gear 42. The fixed side of the plate is held by a series of cams 28 built into the forming presses. The stationary die 30 is fabricated of steel in an "egg crate" type weldment, so that upper edges of its elements cooperate to define the die. Retractable plate conveying devices 44, 46 are built into the plate bending machine. The devices 44, 46, respectively, have v-grooved and convex rimmed rollers 48, 50 at their plate edge and plate underscale engaging upper ends.

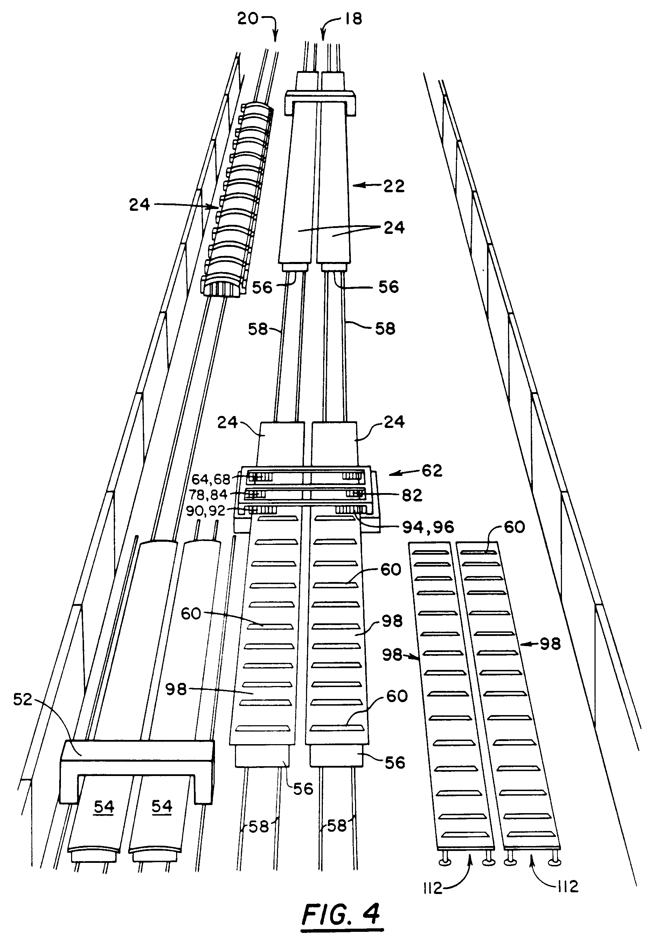

The resulting curved but still not sized steel plates are then conveyed on the line 20 to a flame planer 52 (Figures 1 and 4), similar to automatic burning machine 22 for flat stiffened panels, where they are cut into precise final configuration to provide curved steel plates 54.

Each collocator car 56, comprises a rail car with a roller conveyor on its deck, receives a respective fabricated flat steel plate approximately 8 feet wide and 50 feet long from the automatic burning machine 22 and locates the steel plate in a precise position on the car.

The flat steel plates 24 are transported by respective collocator cars 56 on rails 58 which continue the flat panel lines 18 (Figure 4) where kickplate stiffeners 60 are installed at precise intervals (typically of approximately 32 inches) in a three-stage stiffener installation mechanism 62 (Figures 1 and 4). In order to facilitate this, each collocator car 56, on which a respective flat steel plate 24 is resting, advances by indexing forwards at the same precise intervals using an appropriate gear mechanism.

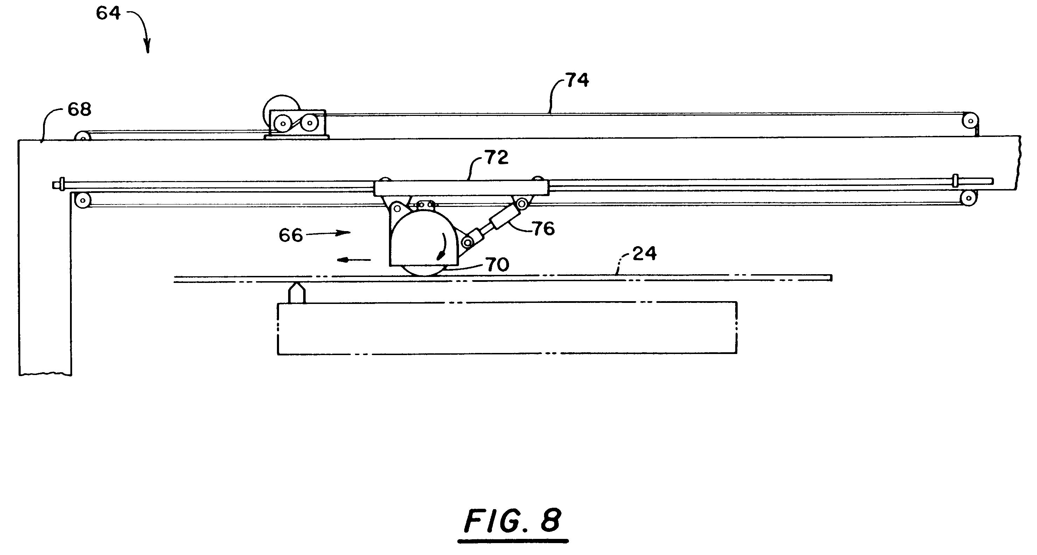

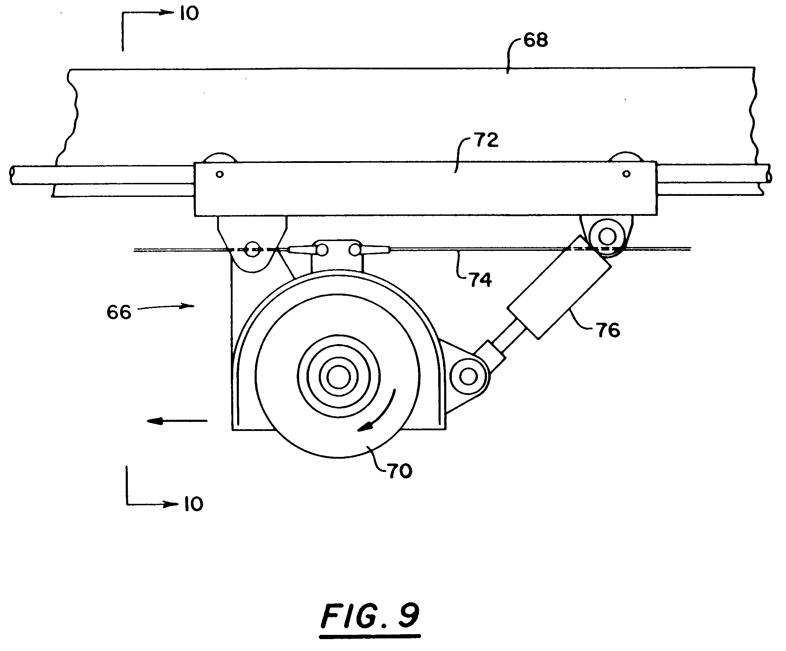

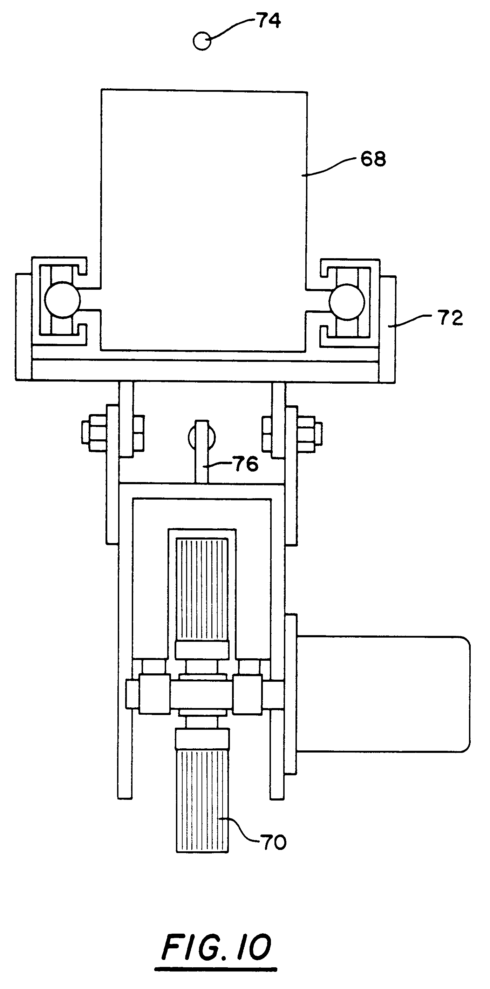

The first stage, 64 (Figures 1, 4 and 8-10), of this stiffener installation mechanism utilizes a grinding machine 66 to remove an approximate 2-inch wide path of mill scale in the way of where each stiffener 60 will be installed. The grinding machine 66 comprises a fixed gantry 68 containing one or more power-rotated grinding wheels 70 mounted on a carriage 72 running transverse to the line of travel of the collocator cars 56, which remove a path of mill scale approximately 2 inches wide in successive precise increments of approximately thirty-two inches as each collocator car 56 is indexed from position to position beneath it. The grinding wheel carriage 72 is electrically driven through a belt or chain mechanism 74 across the gantry. A pneumatic cylinder 76 holds the grinding wheel 70 to the plate with proper force.

The second stage, 78, of the stiffener installation mechanism, receives stiffeners from a kickplate stiffener collator 80, precisely fits and holds each stiffener 60 in its turn to a respective location, which has previously been cleaned of mill scale at 64, and tack welds each stiffener, using a tack welder 82, to the flat plate 24. The second stage 78 includes a fixed gantry 84, located a precise distance of approximately thirty-two inches after the grinder gantry 68, running transverse to the lines of travel of the collocator cars and having for each line a guide 86 into which a succession of identical kickplate steel flat-bar stiffeners 60 is inserted one by one as the collocator cars are indexed from position to position beneath the fixed gantry 84. The fixed gantry 84 is equipped with a mechanical, hydraulic or pneumatic mechanism to lower the guides 86 and compress each successive stiffener 60 onto the respective flat plate 24, to enable the stiffener 60 to be tack-welded to the plate using gantry-mounted tack welders 82, and then to raise the guides to permit the collocator cars 56 to index to the next position.

Each kickplate stiffener collator/inserter 80 is a device onto which a bundle of approximately eighteen identical kickplate stiffeners each approximately seven feet long, six inches deep and one-half inch thick is loaded as each fifty-foot long flat plate is processed. Individual kickplates 60 are oriented transverse to the line of flow of the respective collocator car and stacked side by side in the direction of the line of flow of the respective collocator car. The lead kickplate 60 is positioned alongside the opening to the respective guide 86 of the kickplate positioning gantry 84 and inserted into the guide 86 by use of a mechanical, electrical, pneumatic or hydraulic plunger 88 as the respective collocator car 56 and flat plate 24 are indexed into position. Each remaining stack of kickplates 60 is indexed in the same direction as the line of travel of the respective collocator car. Each time each collocator car 56 is indexed thirty-two inches forward, the respective remaining stack of kickplates is indexed one-half inch using mechanical, electrical, hydraulic or pneumatic plungers 88 calibrated mechanically or electronically to the movement of the respective collocator car. Thus, as each flat plate 24 is indexed into the kickplate installation position, a kickplate 60 is always available to be inserted.

Each collocator 80 is structured and functions similar to a transverse feeder on the head end of a magazine of a photographic slide projector.

The third stage 90 of the stiffener installation mechanism final-welds each stiffener 60 in its turn. Alternately, the second and third stages may be combined, with tack welding being eliminated. In the preferred construction, the third stage comprises a fixed gantry 92 containing for each line a carriage-mounted double fillet, flux-core welding machine 94 or substitute located a precise distance of approximately thirty-two inches after the kickplate installation gantry 78 and oriented transverse to the line of flow of the collocator car. The double fillet welding heads of the welding machine 96 are each equipped with a known seam tracker and appropriate positioning slides to compensate for slightly out-of-flatness of the respective plate 24 or minor misalignment of the kickplate stiffeners 60. The welding machines 96 perform finish welding of individual kickplate stiffeners 60 as the flat plates 24 with fitted kickplates 60 are indexed beneath it on the collocator cars 56, thereby providing stiffened flat panels 98.

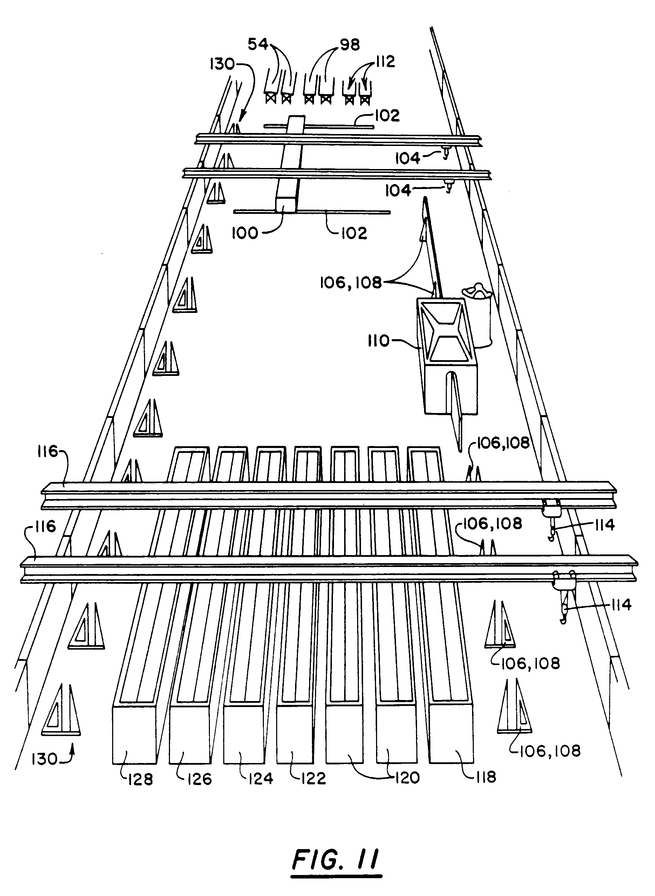

Fabricated curved panels 54 and stiffened flat panels 98 are then conveyed to a transporter car 100, which travels laterally on tracks 102, and then are lifted by hoists 104 from their horizontal positions to a vertical orientation and places it on a chain drive conveyor 106, so that each rests on one of its long edges. The chain drive conveyor 106 transports panels, through guides 108, into and out of a steel-shot abrasive cabinet 110 (Figures 1 and 11) for removal of mill scale, weld slag, weld splatter and other foreign matter.

In the shot-blast cabinet 110, recyclable steel abrasive shot or grit (not shown) is propelled automatically against all surfaces of curved and stiffened flat steel panels 54, 98 being transported through the cabinet by the chain drive conveyor 106 through guides 108 leading into and out of the cabinet. This removes all mill scale, weld slag, weld splatter and other foreign matter from the panels 54, 98.

Fabricated flat panels requiring rework are conveyed by the transporter car 100 to repair stations 112 (Figures 1 and 4) and, upon completion of repairs, are transferred to the abrasive cabinet 110, for surface preparation as described above.

After being shot blasted, curved panels and stiffened flat panels are lifted off the exit conveyor guides 108 (Figures 1 and 11) of the abrasive cabinet 110 using plate clamps 114 hung from the twin monorails 116 running transversely, and are immersed in a rinse tank 118 containing deionized water.

The plate clamps on the twin monorails 116 transport the shot-blasted panels 54, 98 laterally through the five or more positions of the coating process of which the rinse tank 118 is the first.

The rinse tank 118 contains deionized water and is large enough to accommodate one or more of the panels 54, 98 in a vertical position on one of its respective long edges during its rinse, after abrasive cleaning in the shot blast cabinet 110. A wash and pretreatment process is conducted in the rinse tank 118, plus sufficient tanks 120 for two or more subsequent chemical wash and pretreatment stages.

After chemical wash and pretreatment, the next position of the coating line is a cathodic coating tank 122 containing a paint and water solution and large enough to accommodate one or more of the panels for receiving an initial coating, still in a vertical position. The tanks are provided with fenders (not shown) to protect the coating.

The first coating tank preferably contains epoxy paint in water solution, and in it, each panel is cathodically coated, the coating process commercially available from PPG Coatings called Power Cron 640 conductive epoxy primer being presently preferred.

The next position is a curing position 124 with infrared or other surface heaters (not shown) large enough to accommodate one or more of the panels after its initial coating in a vertical position, with fenders (not shown) to protect the coating.

At this curing position 124, the first coating on the curved and flat panels is cured in the infrared-heating cabinet at approximately 350°F.

The next position is a second cathodic coating tank 126 similar to the one at the second position.

After curing at the first curing position 124, the curved and flat panels are immersed in the second coating tank 126 for a second cathodic coat of preferably the same type of epoxy paint, thereafter are removed to a second infrared heating cabinet 128 at a fifth position, for curing, and then stored vertically on their long sides in a storage rack 130 for inspection, with suitable fendering being provided to protect the coating.

The coated panels are then inspected. Inspection criteria include handling damage to the coating, adhesion of the coating to the steel panel, thickness of the coating (normally 2.9 to 3.5 thousandths of an inch (mils.), and curing (hardening).

Curved and stiffened flat panels with unacceptable coatings are conveyed back to the transporter car 100 for reprocessing through the entire surface preparation and coating processes.

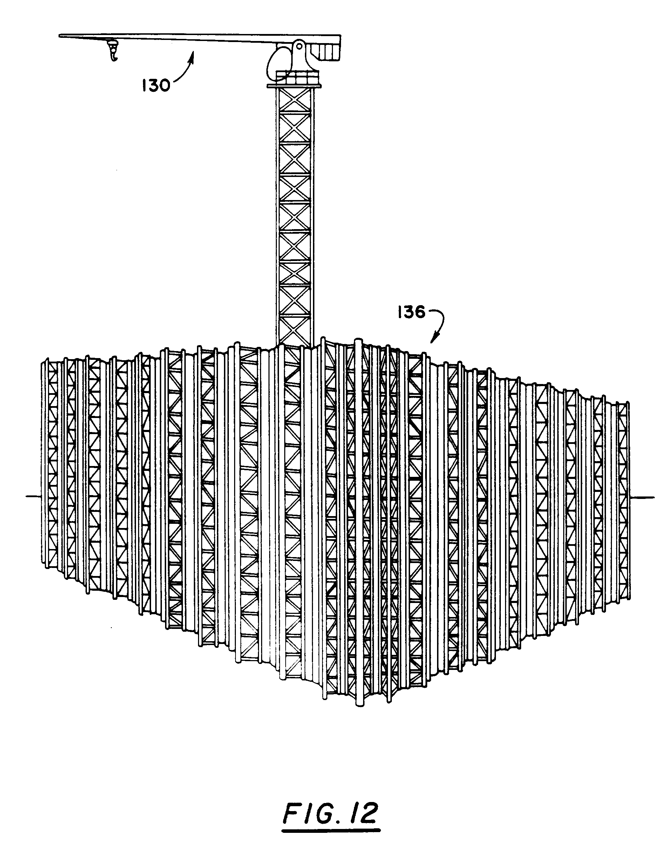

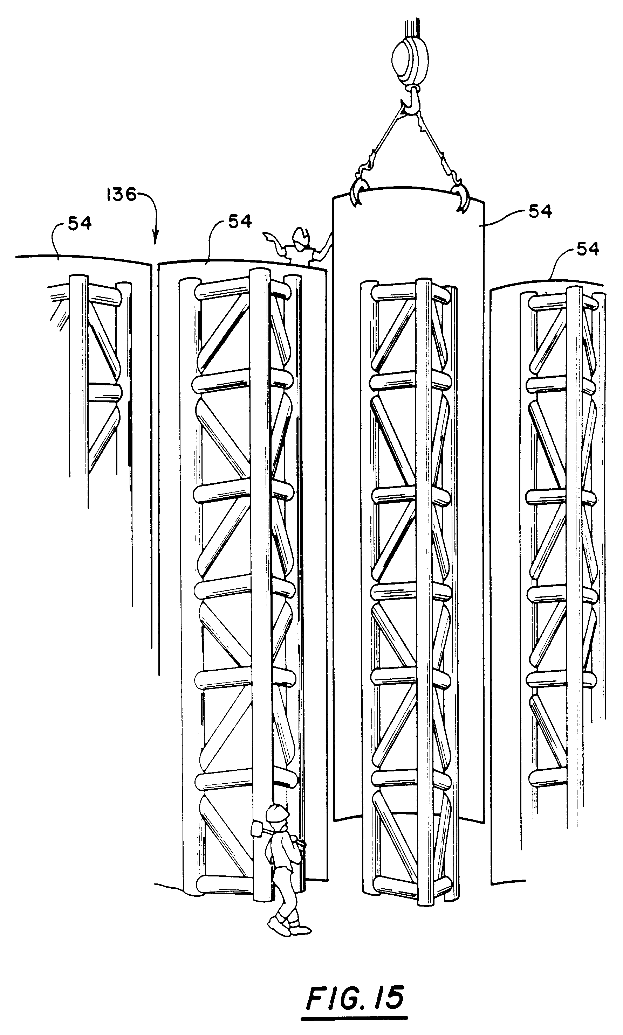

Curved and stiffened flat panels with acceptable coatings are lifted by a crane 130 (Figures 1 and 12), still in a vertical position on their respective end edges and placed either in buffer storage 132 or directly in the subassembly fixture 136 (as shown in Figure 15).

In the buffer storage 132 or fixture 136, the bottom edges of the curved and flat panels being stored or loaded into the fixture are aligned by landing them in guides 138.

The guides 138 provided at the bottom of the fixture 136 are used for precisely positioning the bottom edges of the curved and stiffened flat panels as they are lowered by crane into the fixture 136, without using temporary attachments.

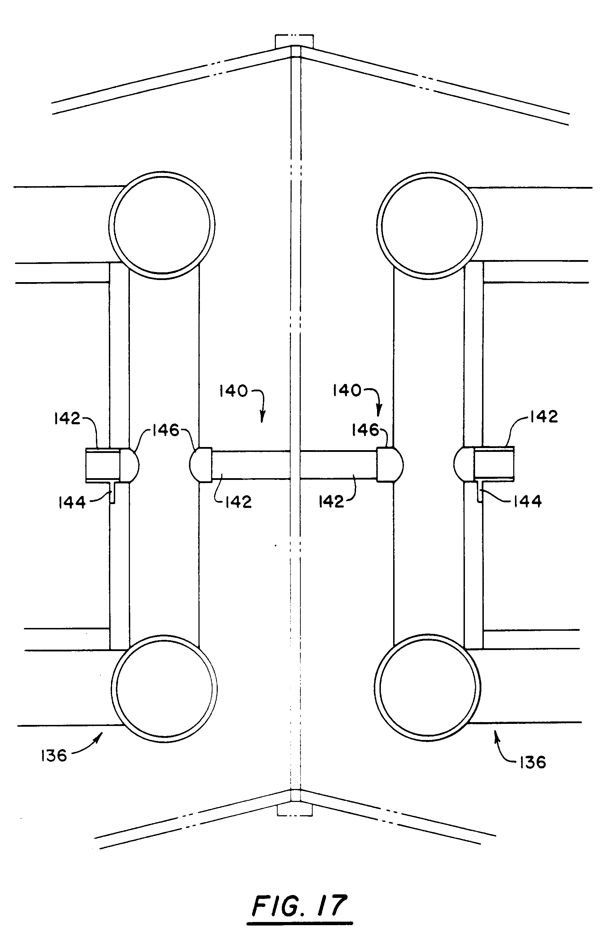

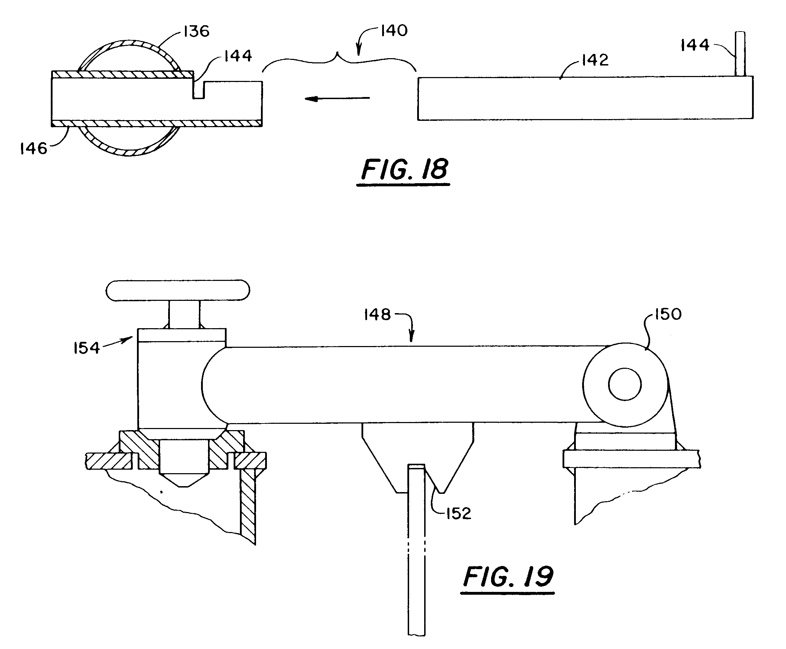

In the fixture 136, buckling of the stiffened flat panels is prevented by manually activating mechanisms 140 (Figures 17 and 18).

Each device 140, a plunger 142, which manually telescopes into and locks at 144 in a fixture leg tube 146, holds a flat stiffened panel in position, to keep the panels from buckling without using temporary attachments.

The top edges of the curved and flat panels are aligned by manually activating devices 148 (Figure 19).

The devices 148, hinged to one fixture leg at 150, notched at 152 to receive a plate edge and clamped to another fixture leg at 154 precisely position the tops of the curved and flat, stiffened panels, without using temporary attachments.

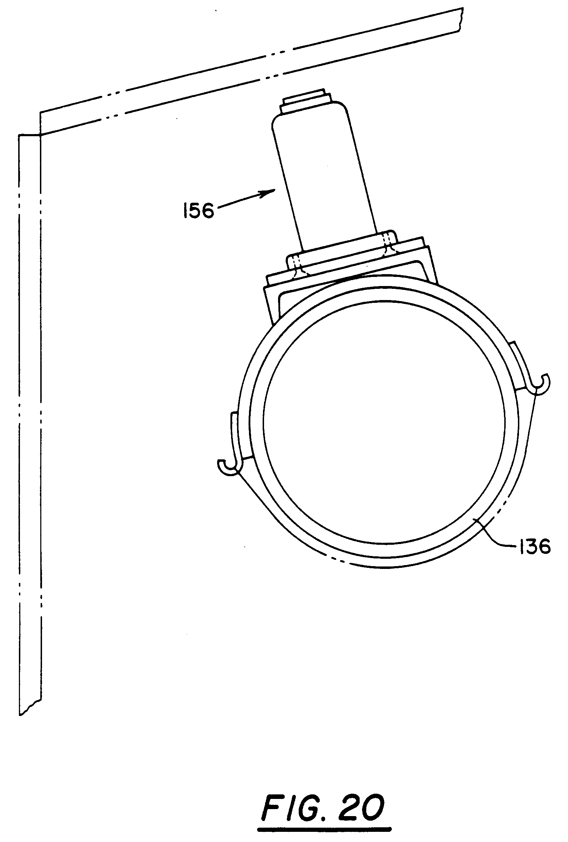

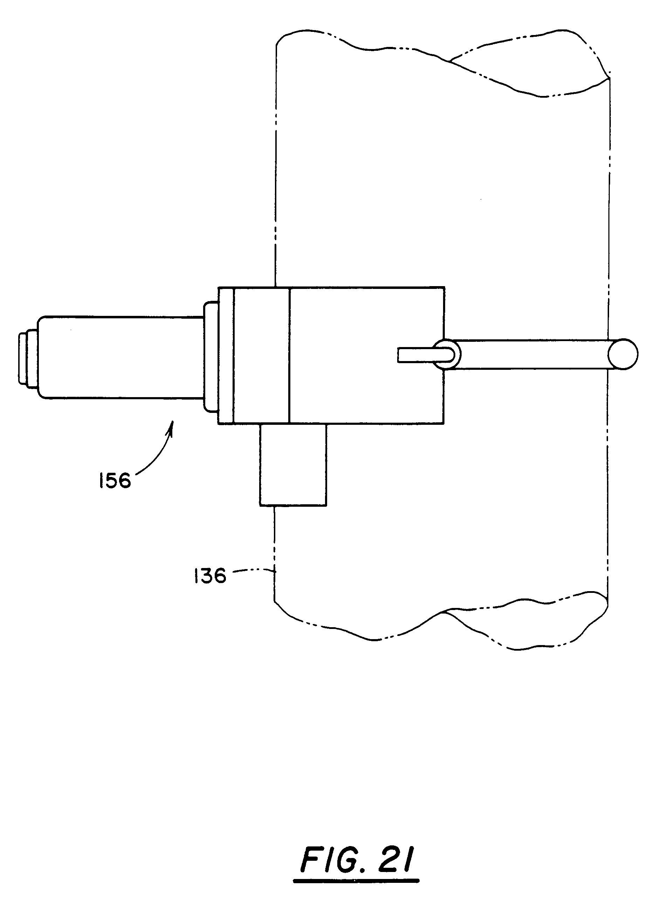

Local random unfairnesses throughout the height of curved and flat panels disposed in the fixture 136 are removed by activating mechanisms 156 (Figures 20 and 21).

The devices 156 apply external pressure at intermediate positions on either face of respective curved or flat plate panels to bring unfair edge portions of those plates into precise welding position, without using temporary attachments. Devices 156 are hydraulically operated and are portable, and can be moved around the fixture 136 and secured to legs or leg braces, as needed, and hydraulically activated to forcefully engage and thus fair the panels as required.

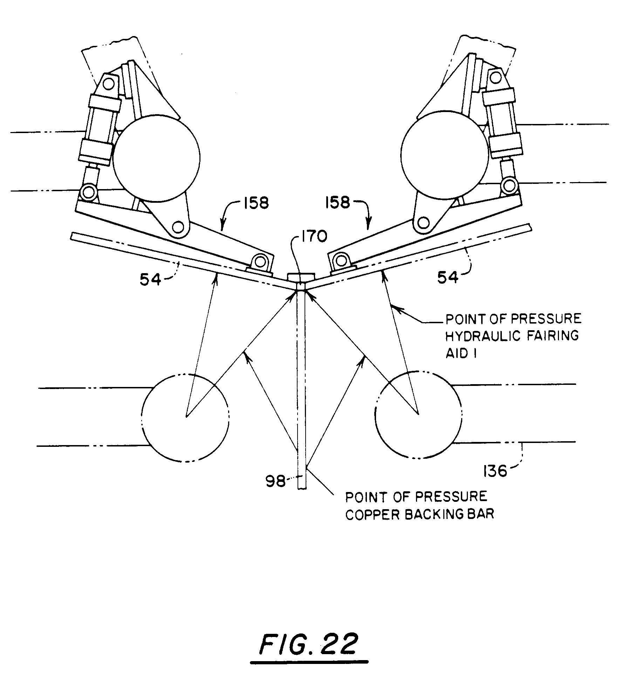

The hydraulically operated devices 158 (Figure 22) are operated to apply external pressure at intermediate positions along edges of the curved plate panels to positively position the edges against the continuous copper backing bars (to be described). Devices 158 are hydraulically operated and are fixed to legs of the fixture 136.

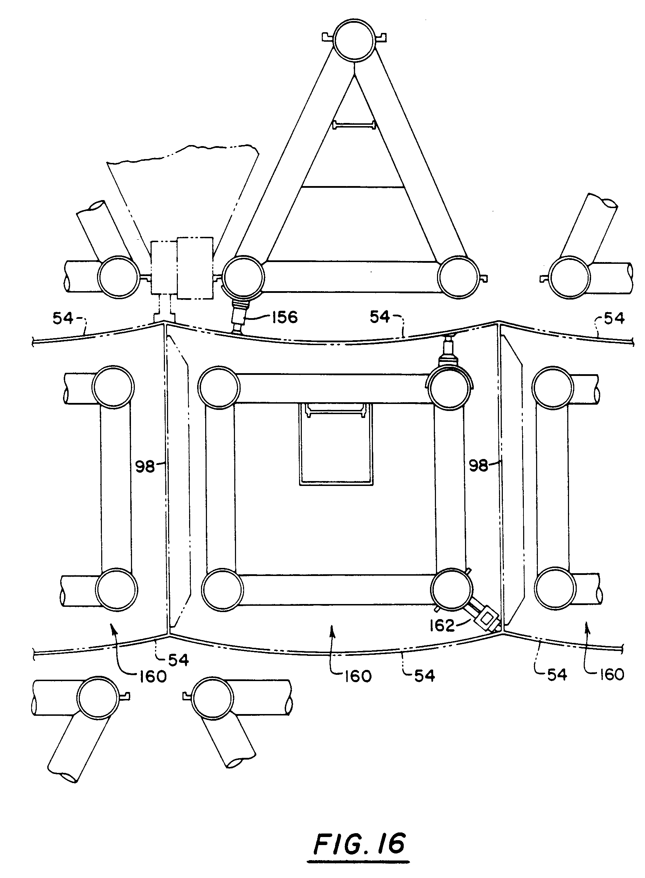

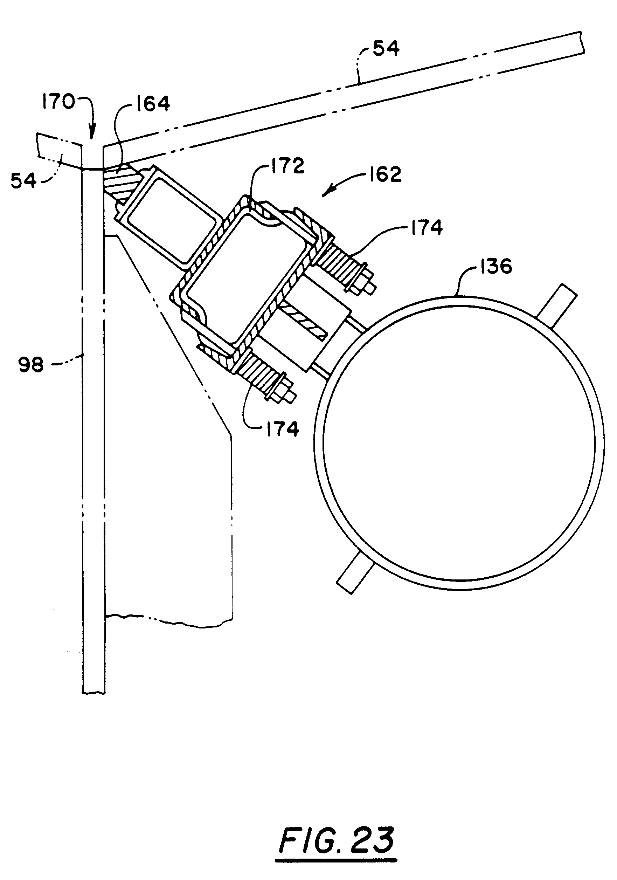

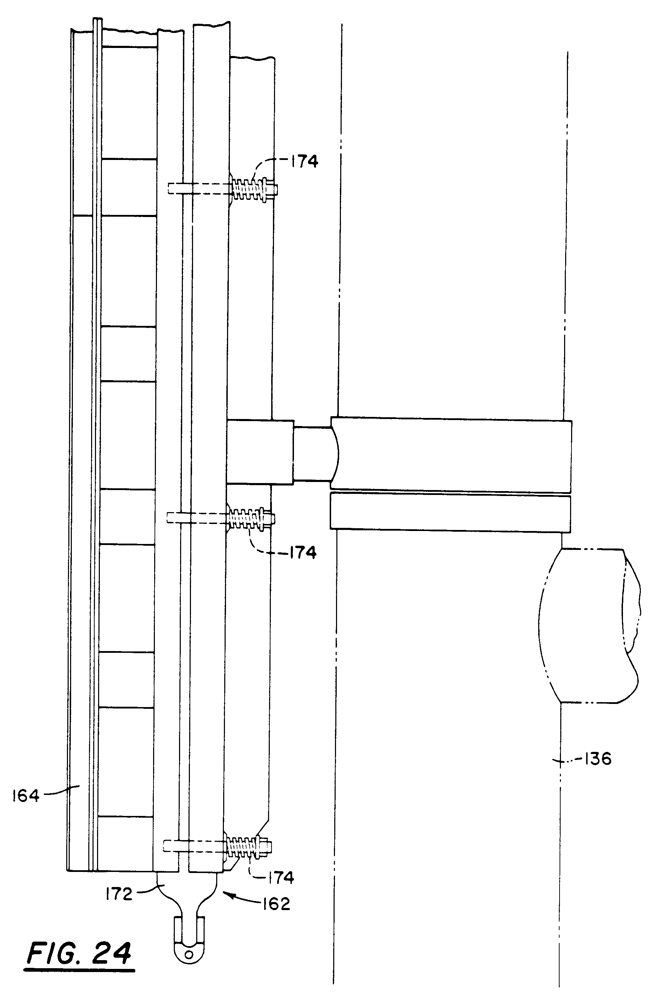

After all of the curved and flat panels have been brought into proper alignment in a given cell 160 of the fixture 136, mechanisms 162 (Figures 16, 23 and 24, only respective ones of which are shown), located in each of the four interior corners of each cell 160, are activated to position the continuous copper backing bars 164, 166, 168, which are variously of the cross-sectional configurations shown in Figures (23, 24, 27) 26 and 28.

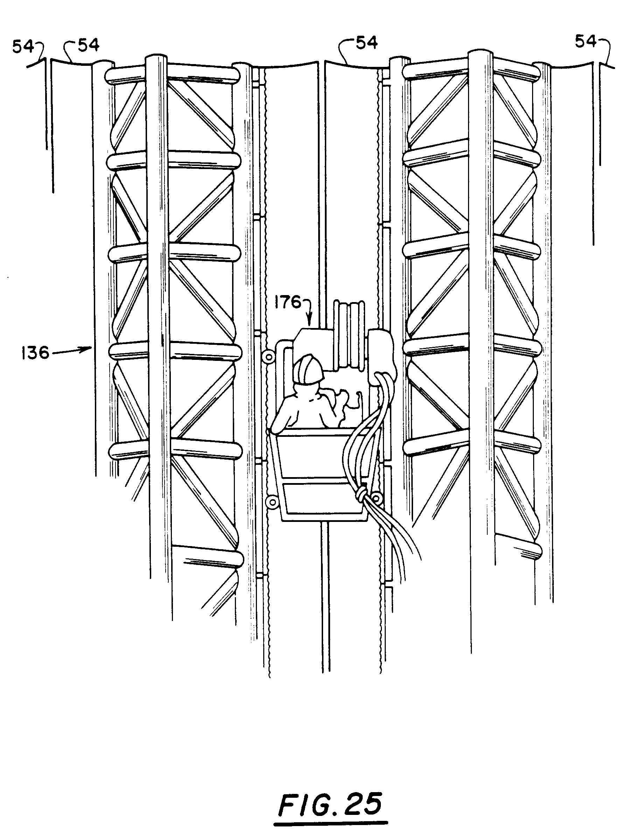

The devices 158 position the continuous copper backing bars 164, 166, 168 in internal corners of each near intersection 170 between adjacent edges of curved and stiffened flat panels 54, 98. The backing bars 164, 166, 168 are positioned pneumatically in the valley formed by edge margins of two respective panels, by inflating a flexible hose 172, thus forcing the backing bar 164, 166, 168 with positive force into damming relationship with the two panels near the intersection. When the electrogas welding (of Figure 25) is completed, air pressure is released from each hose 172 and a spring mechanism 174 returns the backing bars 164, 166, 168 to their original retracted positions.

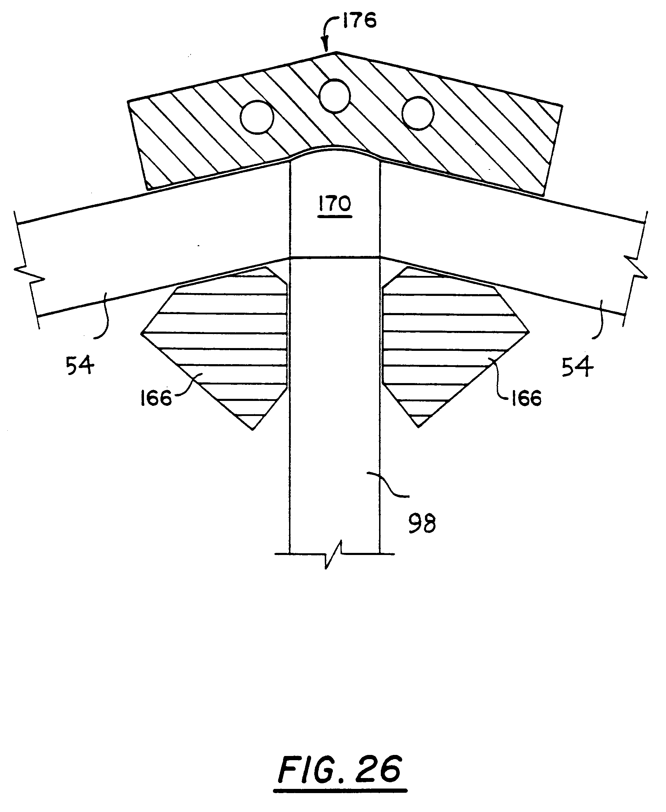

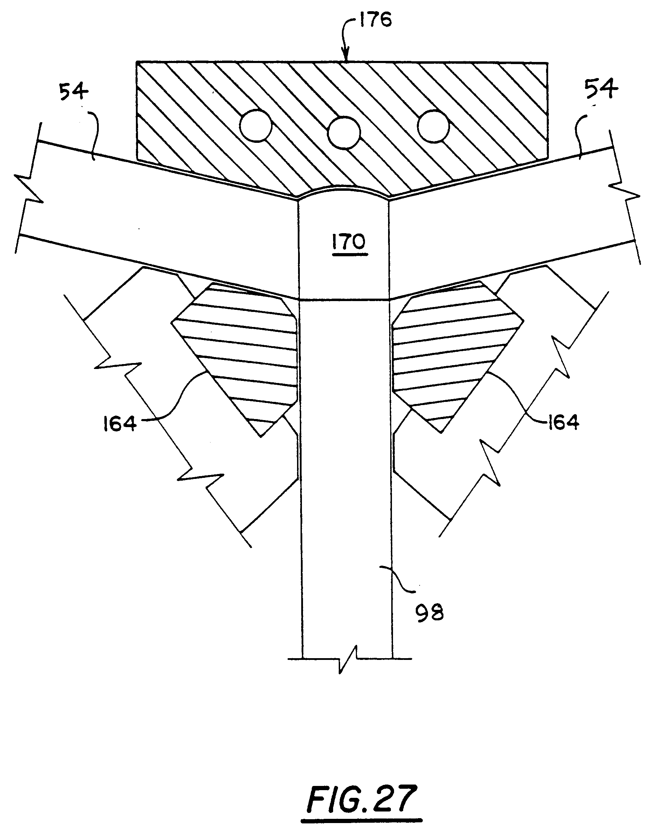

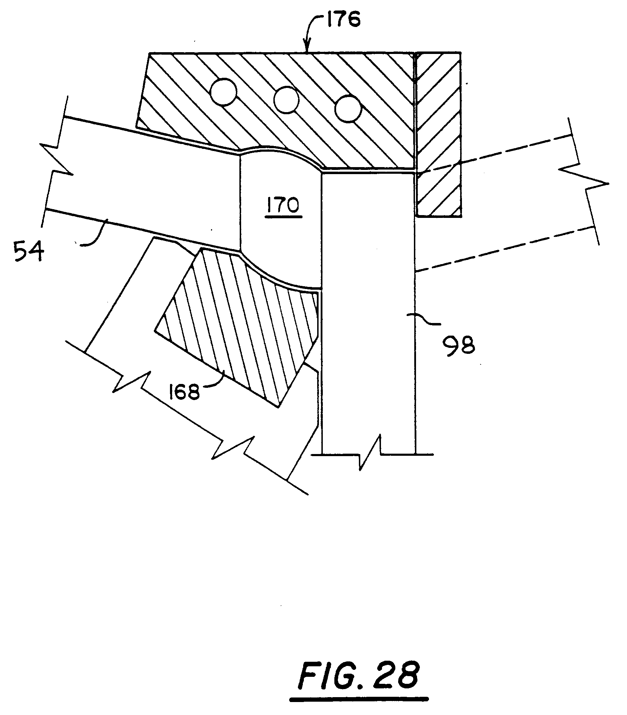

After the curved and flat panels 54, 98 are brought into alignment and the interior copper backing bars 164, 166, 168 are in extended, damming position, weld joints, joining three or two panels simultaneously, with transverse cross-sections shown in Figures 26, 27 or 28, are welded, using a vertical electrogas welding machine (Figure 25). As welding machine 176 vertically rises, it is followed by a vacuum-blast nozzle, or needle gun 178, which removes exterior welding slag, welding splatter, burned paint, and foreign matter. The cleaned surface is then primed and finish painted by the weld machine operator, e.g., using a paint spray applicator 180 as the operator lowers the welding machine 176.

After electrogas vertical welding is complete and exterior of the welds have been prime painted, the panel and backing bar alignment devices 140, 148, 156, 158 and 162 are released.

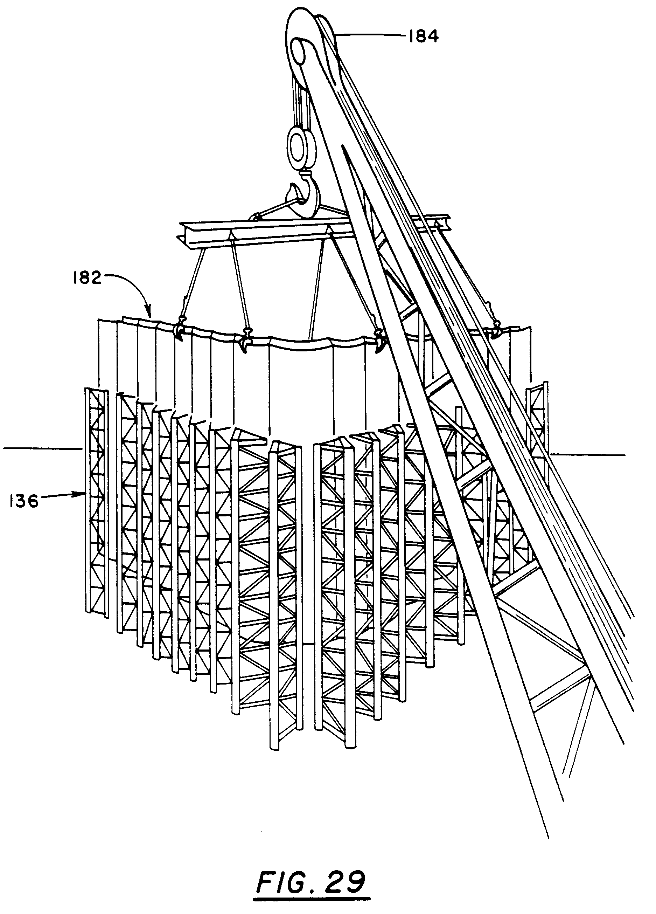

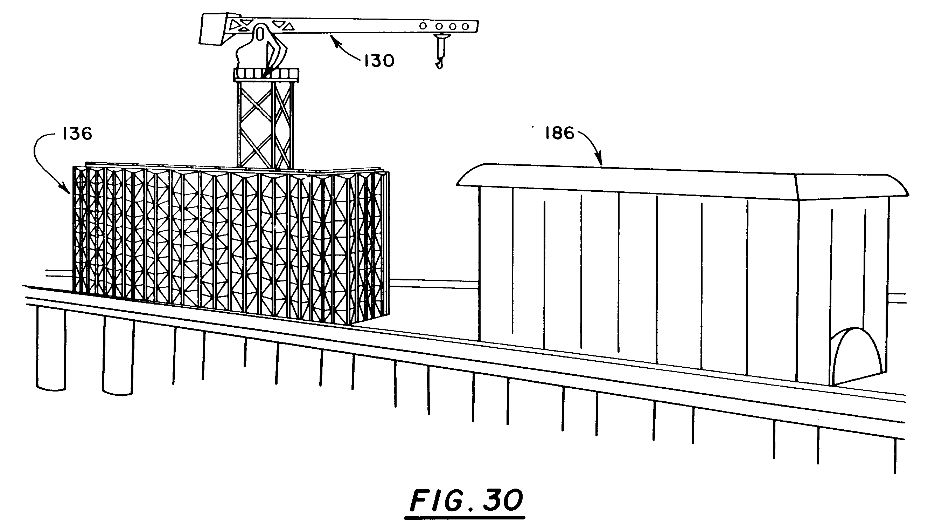

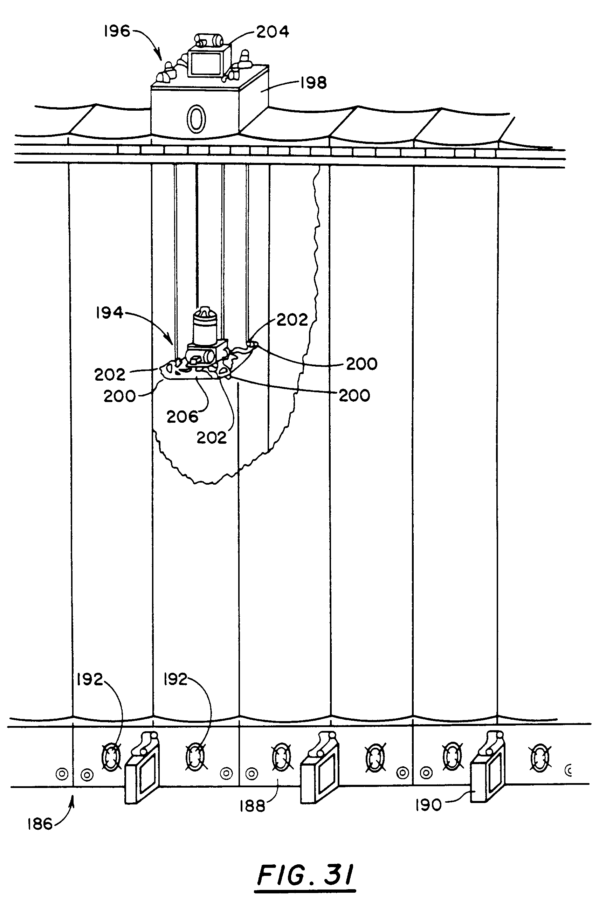

The painted subassembly 182 of panels and welds is then lifted from the fixture by a floating derrick 184 (Figures 1, 29, 30 and 31) and placed in a subassembly touch-up blast and paint facility 186 (Figures 1, 30 and 31).

The main purpose of the touch-up blast and paint facility 186 is to repair interior cell coating damage caused by subassembly welding along interior edges of joints formed at 170 which form the intersection of curved panels 54 and stiffened flat panels 98. The facility 186 includes a supporting structure 188 for the subassembly, with a built-in plenum for intake air to each interior cell 160 of the subassembly including means 190 for dehumidifying intake air and heating it, using steam coils or some other non-explosive means, and, in addition, a means of access 192 to the bottom of each cell 160 to service vacuum-blast and paint equipment 194.

The facility 186 further includes a touch-up blast and paint elevator platform mechanism 196 having a cover 198 which extends over a single interior cell 160 at a time and is adequate for weather protection of that cell.

The cover 198 is provided with an elevator platform 194 having four vacuum-blast nozzles 200 and four paint-spraying nozzles 202, one of each for each interior corner of a respective cell. The platform is suspended from the bottom of the cover at all four corners by a wire rope and pulley arrangement 196 which permits synchronous raising of each corner of the platform at speeds appropriate for both automatic vacuum blasting and automatic spray painting of corners of each individual subassembly cell where welding along the edges of the panels has damaged the coating.

An explosion-proof exhaust fan 204 is mounted in the cover 198, with replaceable filters that are capable of entrapping the paint overspray which will be created by spray painting repaired areas of coating along vertical edges at intersection of curved and stiffened flat panels damaged by welding.

The vacuum-blast machine 194 is mounted on the platform and has four nozzles 200 which are oriented toward the four interior corners of the subassembly cell to accomplish recyclable abrasive blasting of areas along panel edges where the coating has been damaged, in order to remove burned paint, weld slag, weld splatter and other foreign material as the platform is raised in an appropriate speed.

Similarly, four appropriate spray painting nozzles 202 with appropriate supporting air and paint hoses are attached to the platform 206 and oriented toward the interior corners of the respective subassembly cell 160 to enable spray painting of areas vacuum blasted above as the platform is raised at an appropriate speed.

The subassembly 182, after this cleaning and painting, is lifted from the touch-up blast and paint facility 186 using the floating derrick 184, and located onto a barge 208 (Figure 1) for delivery to another location in the shipyard (or to another shipyard altogether) for subsequent module assembly, module erection and tanker longitudinal midbody construction and tanker completion, e.g., using the method and apparatus which is disclosed in more detail in the aforementioned application of Applicant.

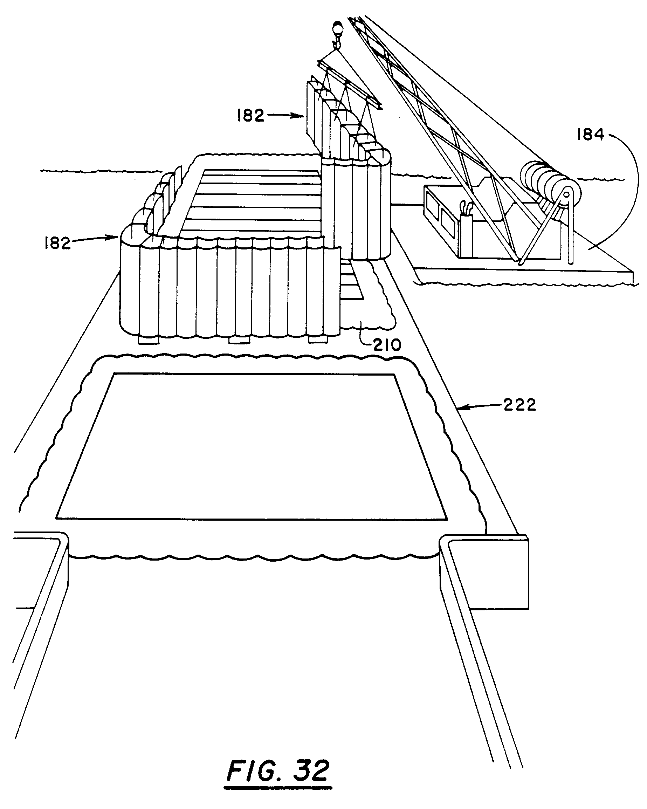

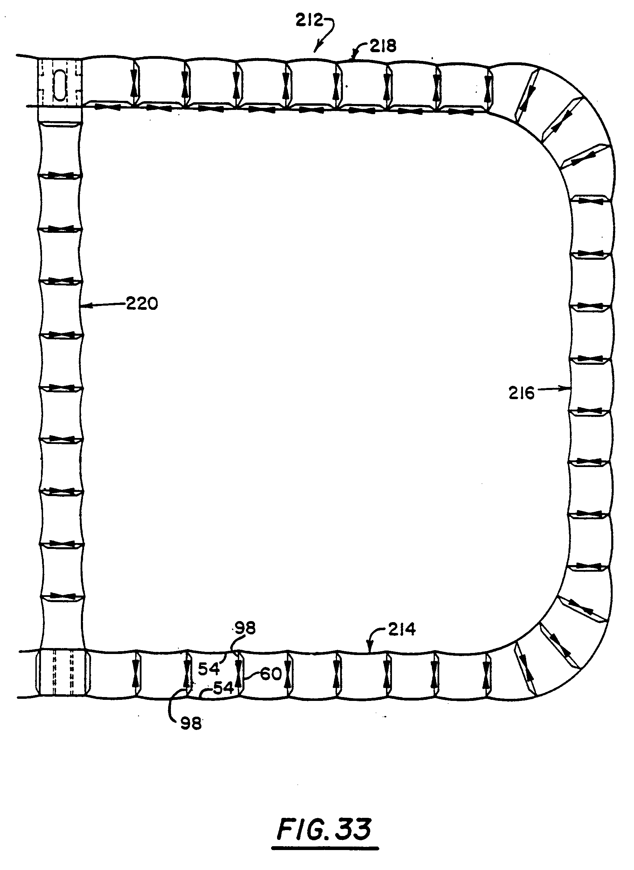

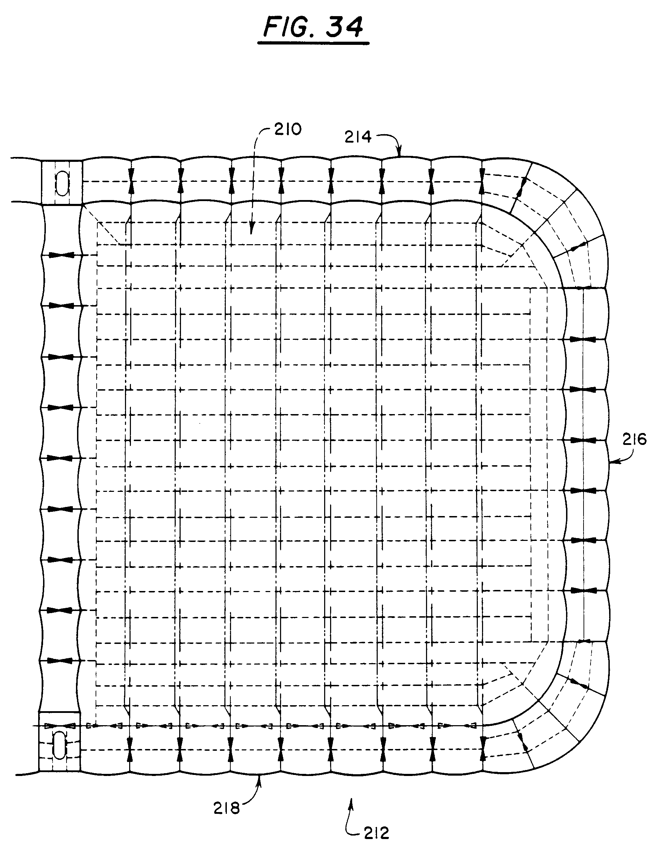

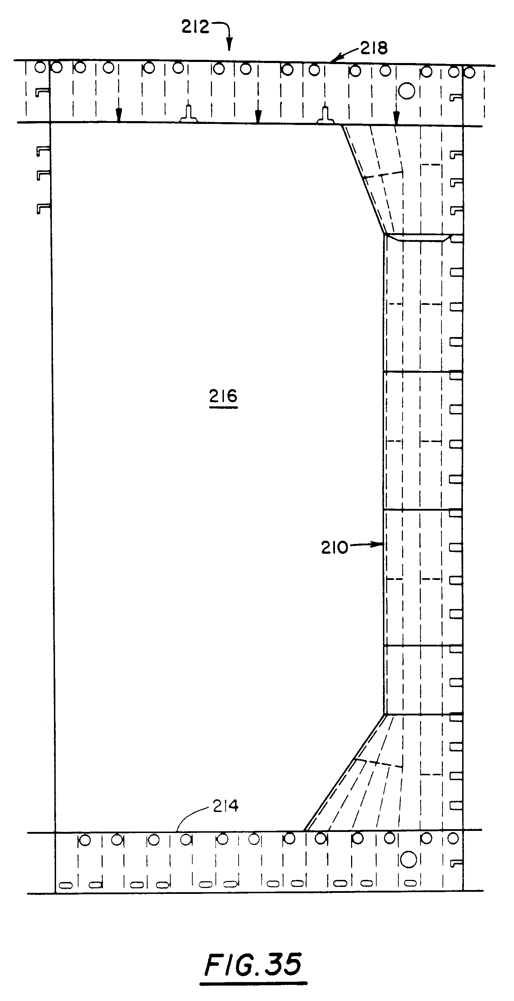

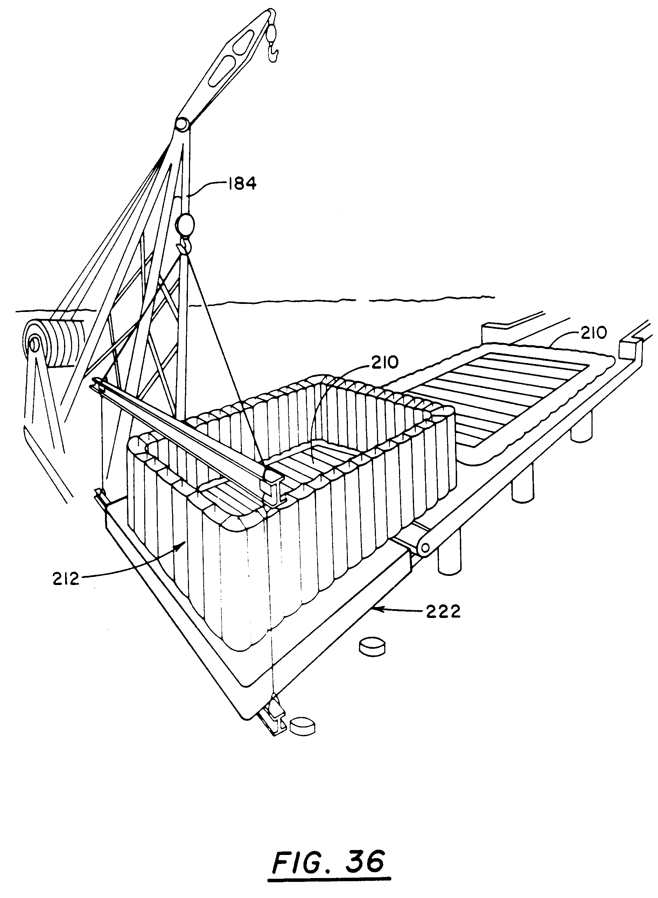

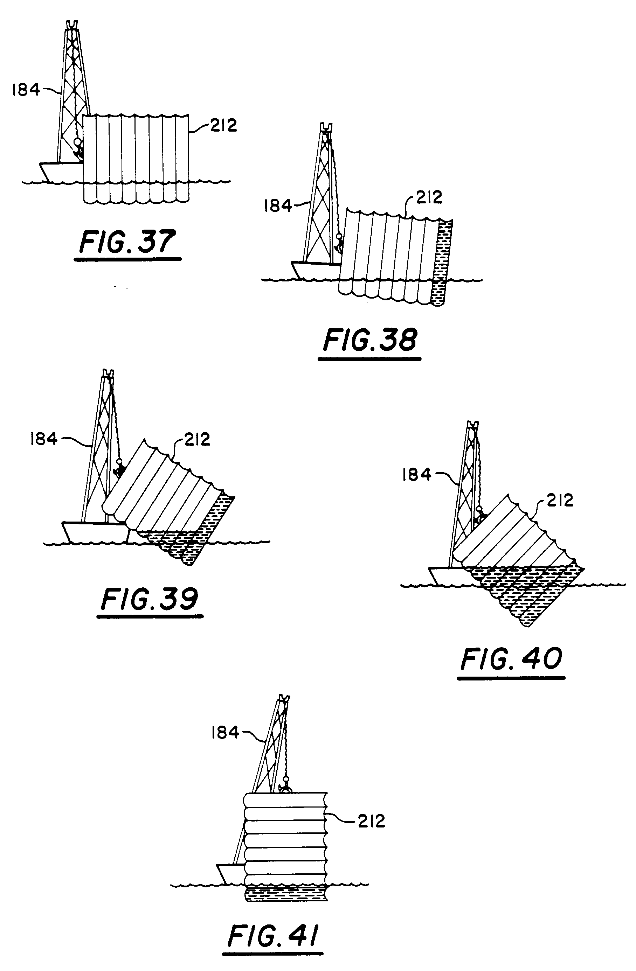

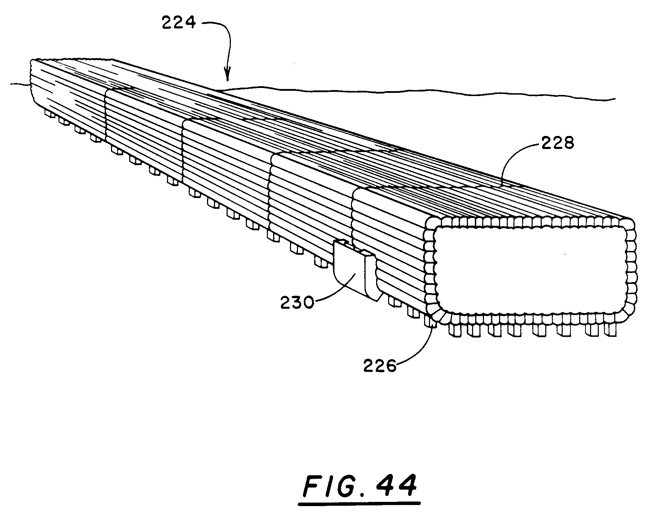

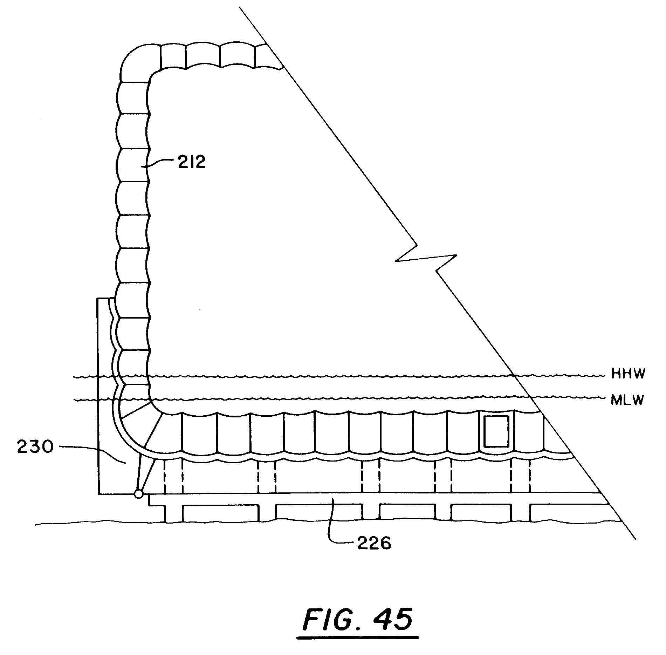

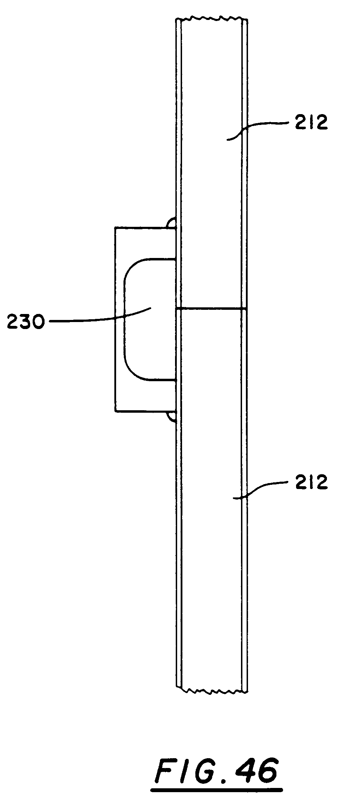

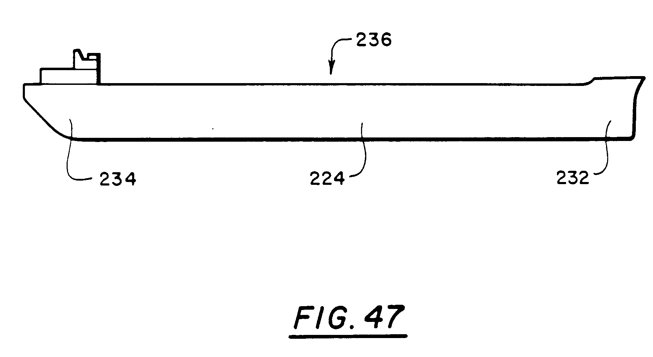

Referring to Figures 32-47, this may include providing a bulkhead 210 at a bulkhead assembly area (Figure 32), assembling a set of module subassemblies 182 vertically about the outer perimeter of the bulkhead 210 and welding the subassemblies 182 to one another and to the bulkhead 210 to create a module 212 (Figures 33-35). The completed module 212 (shown having a double bottom 214, double side walls 216, a double deck 218 and a double longitudinal vertical intermediate wall 220, wherein the curved plates form the skins and the stiffened flat plates 98 form the longitudinal connectors extending between the inner and outer hulls) is then guided by the crane 184 into the water, by temporarily lowering the support from under the topside bulkhead assembly area 222, and floating the module away (Figure 41).

In the series of steps depicted in Figures 37-41, after damming open ends of cells 160 that will become submerged, certain cells are progressively partly flooded, while the crane 184 guides the module 212 as it rolls from its vertical position (Figure 37), to a horizontal position (Figure 41).

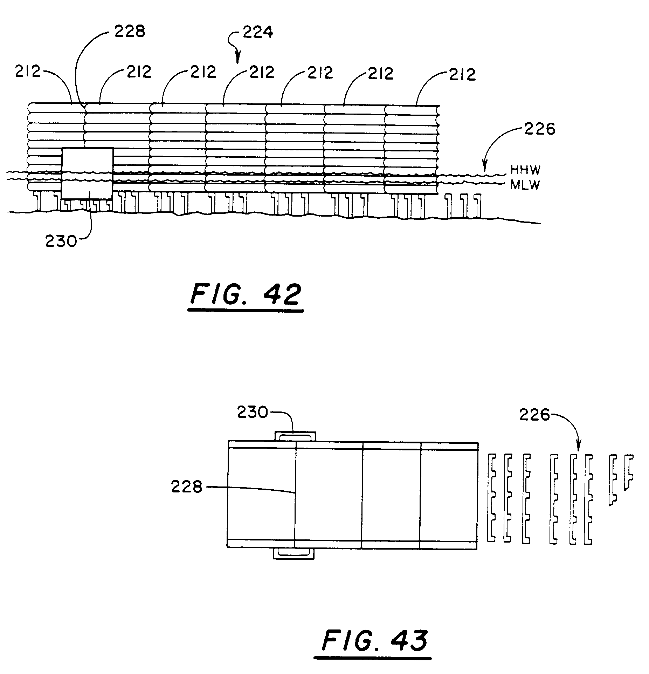

Then, the now-horizontal module 212 is floated to the end of a longitudinal midbody assembly 224 (Figures 42-46) that is partly submerged, at an intertidal location. The partially complete midbody 224 is shifted longitudinally along the longitudinal midbody assembly facility 226 until its growth end 228 is located over a joining area 230. The next horizontal module 212 is then floated into place, end-to-end with the midbody 224 with the abutting ends located in the joining area 230. Water is then excluded from the joining area and the module 212 is welded to the growth end of the midbody 224. These incremental growth steps are repeated until the midbody 224 is of the desired length. The midbody 224 may be conventionally joined to a bow section 232 and a stern section 234 of a VLCC to provide a vessel 236 having a double-hulled longitudinal midbody.

Because it can be modified to some extent without departing from the principles thereof as they have been outlined and explained in this specification, the present invention should be understood as encompassing all such modifications as are within the scope of the following claims.

## Claims

1. A method of fabricating a module structure for a double-hulled vessel, comprising:
(a) providing a plurality of flat plate panels (24);
(b) providing a plurality of further plate panels (54);
(c) mounting stiffener plates (60) to said flat plate panels (24) to provide a plurality of stiffened flat plate panels (98);
(d) providing each said further plate panel (54) and each stiffened flat plate panel (98) with an all-over, cured protective coating to provide respective painted panels;
(e) providing a fixture (136) as an array of upstanding towers fixed on a foundation;
(f) vertically disposing in said fixture, among said towers, a first plurality of said painted further plate panels (54);
(g) vertically disposing in said fixture, among said towers, a second plurality of said painted further plate panels (54);
(h) vertically disposing in said fixture a plurality of said painted stiffened flat plate panels (98);
(i) supporting said panels (54,98) in said fixture (136);
(j) welding joints between side edges of said panels to unite said panels into a double-hull module subassembly (182);
(k) removing support of said fixture (136) from said panels of said subassembly; and
(l) repairing damage caused in step (j) to said cured coating.

2. A method according to claim 1 in which said further plate panels (54) are curved plate panels.

3. A method according to claim 2 in which:
step (a) comprises providing said plurality of flat plate panels, with each being elongated rectangular in outer perimetrical shape so as to have two opposite side edges, two opposite end edges, and two opposite flat faces;
step (b) comprises providing said plurality of further plate panels (54), with each being elongated rectangular in outer perimetrical shape so as to have two opposite side edges, two opposite end edges and two opposite correspondingly generally cylindrically arcuately curved faces, so that each curved plate panel is concave in one direction and convex in an opposite direction about an axis parallel to said side edges; and
step (c) comprises mounting a longitudinally extending series of transversally extending stiffener plates (60) to at least one face of each flat plate panel, so as to provide said plurality of stiffened flat plate panels (98).

4. A method according to any preceding claim in which:
step (f) comprises vertically disposing in said fixture (136), among said towers, said first plurality of said painted further plate panels (54), arranged in a first series, in which individual ones of these panels spacedly adjoin one another, side edge to side edge, with respective gaps between them, in a single layer;
step (g) comprises vertically disposing in said fixture, among said towers, said second plurality of said painted further plate panels (54), arranged in a second series, in which individual ones of these panels spacedly adjoin one another side edge to side edge, with respective gaps between them, in a single layer, so that gaps between panels in said second series are substantially in registry with gaps between panels in said first series, thicknesswise of said fixture;
step (h) comprises vertically disposing in said fixture said plurality of said painted stiffened flat plate panels arranged in a series, in which one side edge of each painted stiffened flat plate panel adjoins a respective said gap in said first series of painted further plate panels and an opposite side edge thereof adjoins a respective said gap in each said second series of painted further plate panels;
step (i) comprises supporting said panels in each of said series of panels with respect to respective ones of said towers of said fixture (136);
step (j) comprises welding joints between and among respective ones of said panel side edges in respective ones of said gaps, thereby filling said gaps and uniting said panels in said fixture into a double-hull module subassembly (182) having a plurality of longitudinally extending cells (160) of generally rectangular transverse cross-sectional shape and two laterally opposite ends where side edges of respective terminal ones of said painted further plate panels are available;
step (k) comprises removing support of said fixture (136) from said panels of said subassembly and removing said subassembly from said fixture; and
step (l) comprises repairing damage caused in step (j) to said cured coating of paint both externally of said subassembly and internally of said cells (160), at internal corners of respective ones of said cells.

5. A method according to any preceding claim further comprising:
(m) replicating steps (a)-(1) to provide a plurality of said subassemblies (182); and
(n) weldingly joining a plurality of said subassemblies, at respective said side edges of respective terminal ones of said painted further plate panels, to thereby provide a laterally continuous, tubular module (212) having two longitudinally opposite ends.

6. A method according to Claim 5, wherein:
step (n) further includes providing a transversally extending bulkhead (210) and weldingly assembling each subassembly (182), at one end thereof, perimetrically around said bulkhead while weldingly joining said subassemblies to one another, so that each module (212) has a transverse bulkhead provided at one end thereof.

7. A method according to Claim 6, further including:
(o) replicating steps (m) and (n) to provide a plurality of modules (212), each having a transverse bulkhead (210) provided at one end thereof; and
(p) weldingly joining a succession of said modules to one another end to end in a longitudinally extending series, to thereby provide a double-hulled tanker longitudinal midbody (224) having two opposite ends.

8. A method according to Claim 7, further including:
joining a vessel bow section (232) to one end of said longitudinal midbody and a vessel stern section (234) to an opposite end of said longitudinal midbody (224), to thereby provide a double-hulled vessel (236).

9. A method according to any preceding Claim, wherein:
step (a) comprises providing a plurality of raw flat plates of steel, and flame-cutting said plates to edge-trim them and thereby provide said flat plate panels (24).

10. A method according to Claim 2, or any of claims 3 to 9 when dependent upon claim 2 wherein:
step (b) comprises providing a plurality of raw flat plates of steel, bending said raw flat plates about a longitudinal axis to provide curvature thereto, and flame-cutting the resultingly curved raw plates to edge-trim them and thereby provide said curved plate panels (54).

11. A method according to Claim 9 or 10, wherein:
as a precursor to step (c) each face of a flat plate panel which is to have at least one stiffener plate (60) mounted thereto is cleaned in a respective path extending transversally along each such face; and
in step (c), a respective stiffener plate (60) is welded edgewise onto a respective said face of a respective said flat plate panel (24), on a respective said cleaned path.

12. A method according to Claim 11, wherein:
each said cleaned path is provided by grinding a respective band of the respective said face of the respective said flat plate panel (24).

13. A method according to Claim 10, or claim 11 or 12 when including the features of claim 10, wherein:
in step (b), said bending is accomplished by coordinately pressing each respective raw flat plate against a convex die using a plurality of coordinatingly moved concavely curved press platens.

14. A method according to any preceding claim, wherein:
step (i) comprises jacking against and locking portions of respective ones of said panel faces with jacking elements mounted to said towers.

15. A method according to any preceding claim, wherein:
step (j) comprises electrogas welding said joints using an upwardly travelling welding head while supporting respective panel edge margins at respective gaps between panels, while welding the respective joint, using a plurality of backing bars pressed into respective gap corners.

16. A method according to any preceding claim, wherein:
in step (d), each said panel is cleaned and then cathodically coated with epoxy paint.

17. A method according to claim 16 in which the coating is cured by infra-red or other surface heating means.

18. A method according to claim 16 or 17 in which the coating is applied to a coating thickness of 2.9 to 3.5mm thick.

19. A sub-assembly for a double-hulled vessel, comprising:
a plurality of flat plate panels (24); and
a plurality of further plate panels (54);
a first plurality of said further plate panels (54) being arranged in a first series, in which individual ones of these panels adjoin one another, side edge to side edge in a single layer;
a second plurality of said further plate panels (54) being arranged in a second series, in which individual ones of these panels adjoin one another, side edge to side edge in a single layer; and
a plurality of said flat plate panels (24) being arranged in a series positioned between the first plurality of said further plate panels (54) and the second plurality of said further plate panels (54);
characterised in that each flat plate panel (24) has stiffener plates (60) mounted to at least one face thereof, so as to provide a plurality of stiffened flat plate panels (98);
said first series of further plate panels (54) being arranged with individual ones of these panels spacedly adjoining one another, side edge to side edge, with respective gaps between them; and said second series of further plate panels (54) being arranged with individual ones of these panels spacedly adjoining one another side edge to side edge, with respective gaps between them, in such a manner that gaps between panels in said second series are substantially in register with gaps between panels in said first series;
said series of stiffened flat plate panels (98) being arranged with one side edge of each stiffened flat plate panel (98) adjoining a respective said gap in said first series of further plate panels (54) and an opposite side edge thereof adjoining a respective said gap in each said second series of further plate panels (54); and there being provided welded joints between and among respective ones of said panel side edges in respective ones of said gaps, filling said gaps and uniting said panels (54, 98) in a double-hull module sub-assembly (182);
said module structure having a first coating comprising an all-over, cured protective coating extending over said panels (54, 98) up to said welded joints, and a second coating comprising a touch-up cured protective coating extending over said welded joints, said second touch-up, cured protective coating overlapping said first all-over, cured protective coating in the region of said side edges of said panels (54, 98).

20. A sub-assembly according to claim 19 in which said further plate panels (54) are curved plate panels.

21. A sub-assembly according to claim 20 in which each plate panel (54) is elongated rectangular in outer perimetrical shape so as to have two opposite side edges, two opposite end edges and two opposite correspondingly generally cylindrically arcuately curved faces, so that each curved plate panel is concave in one direction and concave in an opposite direction about an axis parallel to said side edges.

22. A sub-assembly according to any of claims 20 to 21 in which said first coating and said second coating each comprises an infra-red heat-cured conductive epoxy paint.

23. A sub-assembly according to claim 21 or 22 in which the first coating thickness is in the range 2.9 to 3.5mm thick, and the second coating thickness is in the range 2.9 to 3.5mm thick.

24. A module for a double-hulled vessel comprising a plurality of sub-assemblies (182) according to claim 19, 20 or 21 welded together at respective said side edges of respective terminal ones of said painted further plate panels (54), to thereby provide a laterally continuous, module (212).

25. A longitudinal mid-body for a double-hulled vessel comprising a plurality of modules (212) according to claim 24, each having a transverse bulk head (210), said sub-assemblies (182) being weldingly assembled together perimetrically around said bulk heads so that each module has a transverse bulk head provided at one end thereof, said modules being welded together in a succession of modules welded one to another end to end in a longitudinally extending series, to thereby provide a double-hulled tanker longitudinal mid-body.

26. A double-hulled vessel comprising a vessel bow section (232) joined to one end of a longitudinal mid-body according to claim 25, and a vessel stern section (234) joined to an opposite end of said longitudinal mid-body, to thereby provide a double-hulled vessel (236).

## Patentansprüche

1. Verfahren zum Herstellen einer Modul-Anordnung für einen doppelwandigen Schiffsrumpf, mit den Schritten:
(a) Vorsehen einer Anzahl von ebenen Platten (24);
(b) Vorsehen einer Anzahl von zusätzlichen Platten (54);
(c) Anbringen von Verstärkungsleisten (60) an den ebenen Platten (24), um eine Anzahl von verstärkten ebenen Platten (98) herzustellen;
(d) Aufbringen einer vollständigen, ausgehärteten Schutzschicht auf jede zusätzliche Platte (54) und auf jede verstärkte ebene Platte (98), um beschichtete Platten herzustellen;
(e) Vorsehen einer Montageeinrichtung (136), die eine Gruppe von auf einem Fundament aufgestellten, aufrechtstehenden Stützen aufweist;
(f) Anordnen einer ersten Anzahl beschichteter zusätzlicher Platten (54) an der Montageeinrichtung in vertikaler Richtung zwischen den Stützen;
(g) Anordnen einer zweiten Anzahl beschichteter zusätzlicher Platten (54) an der Montageeinrichtung in vertikaler Richtung zwischen den Stützen;
(h) Anordnen einer Anzahl beschichteter, verstärkter ebener Platten (98) an der Montageeinrichtung in vertikaler Richtung;
(i) Abstützen der Platten (54, 98) an der Montageeinrichtung (136);
(j) Schweißen von Verbindungen zwischen den Seitenkanten der Platten, um die Platten zu einer doppelwandigen Modul-Unteranordnung (182) zu verbinden;
(k) Entfernen der Abstützungen der Montageeinrichtung (136) von den Platten der Unteranordnung; und
(l) Ausbessern von Schäden, die in Schritt (j) an der ausgehärteten Schicht entstanden sind.

2. Verfahren nach Anspruch 1, wobei die zusätzlichen Platten (54) gekrümmte Platten sind.

3. Verfahren nach Anspruch 2, wobei:
Schritt (a) das Vorsehen der Anzahl ebener Platten umfaßt, von denen jede eine längliche Form mit einem rechteckigen Außenumfang hat, so daß sie zwei gegenüberliegende Seitenkanten, zwei gegenüberliegende Endkanten und zwei gegenüberliegende ebene Flächen aufweist;
Schritt (b) das Vorsehen einer Anzahl zusätzlicher ebener Platten (54) umfaßt, von denen jede eine längliche Form mit einem rechteckigen Außenumfang hat, so daß sie zwei gegenüberliegende Seitenkanten, zwei gegenüberliegende Endkanten und zwei gegenüberliegende Flächen hat, die jeweils im wesentlichen zylindrisch bogenförmig gekrümmt sind, so daß sich jede gekrümmte Platte in einer Richtung konkav und in einer gegenüberliegenden Richtung konvex um eine parallel zu den Seitenkanten verlaufende Achse erstreckt; und
Schritt (c) das Anbringen einer in Längsrichtung verlaufenden Reihe von sich quer erstreckenden Verstärkungsleisten (60) an zumindest einer Fläche jeder ebenen Platte umfaßt, um so eine Anzahl von verstärkten ebenen Platten (98) herzustellen.

4. Verfahren nach einem der vorhergehenden Ansprüche, wobei:
Schritt (f) das Anordnen der ersten Anzahl beschichteter zusätzlicher Platten (54) an der Montageeinrichtung (136) in vertikaler Richtung zwischen den Stützen umfaßt, wobei die Platten in einer ersten Reihe angeordnet sind, in welcher die einzelnen Platten Seitenkante an Seitenkante mit jeweils zwischenliegenden Spalten in einer einzelnen Schicht beabstandet nebeneinander angeordnet sind;
Schritt (g) das Anordnen der zweiten Anzahl beschichteter zusätzlicher Platten (54) an der Montageeinrichtung in vertikaler Richtung zwischen den Stützen umfaßt, wobei die Platten in einer zweiten Reihe angeordnet sind, in welcher die einzelnen Platten Seitenkante an Seitenkante mit jeweils zwischenliegenden Spalten in einer einzelnen Schicht beabstandet nebeneinander angeordnet sind, so daß die Spalte zwischen den Platten in der zweiten Reihe in Erstreckungsrichtung der Montageeinrichtung im wesentlichen mit den Spalten zwischen den Platten in der ersten Reihe fluchten;
Schritt (h) das Anordnen der in einer Reihe angeordneten, beschichteten, verstärkten ebenen Platten an der Montageeinrichtung in vertikaler Richtung umfaßt, wobei eine Seitenkante jeder beschichteten, verstärkten ebenen Platte gegen einen zugehörigen Spalt in der ersten Reihe beschichteter zusätzlicher Platten und eine gegenüberliegende Seitenkante gegen einen zugehörigen Spalt in der zweiten Reihe beschichteter zusätzlicher Platten anliegt;
Schritt (i) das Abstützen der Platten in jeder der Plattenreihen gegen jeweils eine der Stützen der Montageeinrichtung (136) umfaßt;
Schritt (j) das Schweißen der Verbindungen zwischen jeweils zusammengehörigen Seitenkanten der Platten an den entsprechenden Spalten umfaßt, wodurch die Spalte ausgefüllt und die Platten an der Montageeinrichtung zu einer doppelwandigen Modul-Unteranordnung (182) verbunden werden, die eine Anzahl von sich in Längsrichtung erstreckenden Zellen (160) enthält, die im wesentlichen einen rechteckigen Querschnitt mit zwei sich seitlich gegenüberliegende Enden haben, an denen die Seitenkanten der jeweils außenliegenden, beschichteten zusätzlichen Platten bearbeitet werden können;
Schritt (k) das Entfernen der Abstützungen der Montageeinrichtung (136) von den Platten der Unteranordnung und das Abheben der Unteranordnung von der Montageeinrichtung umfaßt; und
Schritt (l) das Ausbessern von Schäden umfaßt, die in Schritt (j) an den inneren Ecken der jeweiligen Zellen an der ausgehärteten Farbbeschichtung entstanden sind, und zwar sowohl außerhalb der Unteranordnung als auch innerhalb der Zellen (160).

5. Verfahren nach einem der vorhergehenden Ansprüche, mit den weiteren Schritten:
(m) wiederholen der Schritte (a) bis (l), um eine Anzahl von Unteranordnungen (182) herzustellen; und
(n) Verschweißen einer Anzahl dieser Unteranordnungen an den jeweiligen Endkanten der jeweils außenliegenden, beschichteten zusätzlichen Platten, um dadurch ein in Seitenrichtung fortlaufendes, röhrenförmiges Modul (212) mit zwei in Längsrichtung gegenüberliegenden Enden herzustellen.

6. Verfahren nach Anspruch 5, wobei:
Schritt (n) außerdem das Vorsehen einer sich quer erstreckenden Trennwand (210) und das Verschweißen jeder Unteranordnung (182) an einem Ende mit der Umfangskante der Trennwand umfaßt, wobei die Unteranordnungen miteinander verschweißt werden, so daß an einem Ende jedes Moduls (212) eine sich quer erstreckende Trennwand vorgesehen ist.

7. Verfahren nach Anspruch 6, mit den weiteren Schritten:
(o) Wiederholen der Schritte (m) und (n), um eine Anzahl von Modulen (212) herzustellen, die jeweils an einem Ende eine sich quer erstreckende Trennwand (210) haben; und
(p) Verbinden einer Anzahl dieser Module an deren Enden, um eine sich längs erstreckende Reihe zu bilden, um so für einen Tanker einen längsgerichteten doppelwandigen Mittelkörper (224) mit zwei gegenüberliegenden Enden herzustellen.

8. Verfahren nach Anspruch 7, mit den weiteren Schritten:
Anbringen eines Rumpf-Bugabschnittes (232) an einem Ende des längsgerichteten Mittelkörpers und eines Rumpf-Heckabschnittes (234) an einem gegenüberliegenden Ende des längsgerichteten Mittelkörpers (224), um so einen doppelwandigen Schiffsrumpf (236) herzustellen.

9. Verfahren nach einem der vorhergehenden Ansprüche, wobei:
Schritt (a) das Vorsehen einer Anzahl unbearbeiteter ebener Stahlplatten und das Brennschneiden der Platten zum Schneiden der Kanten umfaßt, um so die ebenen Platten (24) herzustellen.

10. Verfahren nach Anspruch 2 oder nach einem der Ansprüche 3 bis 9, sofern diese von Anspruch 2 abhängig sind, wobei:
Schritt (b) das Vorsehen einer Anzahl unbearbeiteter ebenen Stahlplatten, das Biegen der unbehandelten ebenen Platten um eine Längsachse, um darin eine Krümmung auszubilden, und das Brennschneiden der entstandenen, gekrümmten, unbehandelten Platten zum Schneiden der Kanten umfaßt, um so die gekrümmten Platten (54) herzustellen.

11. Verfahren nach Anspruch 9 oder 10, wobei:
als Vorschritt zu Schritt (c) jede Fläche einer ebenen Platte, an der zumindest eine Verstärkungsleiste (60) angebracht wird, jeweils an einem entsprechenden Weg, der sich quer entlang jeder dieser Flächen erstreckt, gereinigt wird; und
in Schritt (c) jeweils eine Verstärkungsleiste (60) hochkant an einem gereinigten Weg auf eine entsprechende Fläche einer ebenen Platte (24) aufgeschweißt wird.

12. Verfahren nach Anspruch 11, wobei:
jeder gereinigte Weg durch Abschleifen jeweils eines Streifens auf der entsprechenden Fläche der ebenen Platte (24) gebildet wird.

13. Verfahren nach Anspruch 10 oder nach Anspruch 11 oder 12, sofern dieser die Merkmale des Anspruchs 10 enthält, wobei:
in Schritt (b) das Biegen durchgeführt wird, indem jeweils jede unbehandelte ebene Platte mittels einer Anzahl konkav gekrümmter Preßplatten, die aufeinander abgestimmt bewegt werden, durch eine aufeinander abgestimmte Bewegung gegen einen konvex geformten Stempel gedrückt werden.

14. Verfahren nach einem der vorhergehenden Ansprüche, wobei:
Schritt (i) das Andrücken und Befestigen von Bereichen der jeweiligen Plattenflächen mit Befestigungselementen umfaßt, die an den Stützen montiert sind.

15. Verfahren nach einem der vorhergehenden Ansprüche, wobei:
Schritt (j) das Elektrogasschweißen der Verbindungen umfaßt, wobei ein sich aufwärts bewegender Schweißkopf verwendet wird, während jeweils die Plattenkanten an die jeweiligen Spalte zwischen den Platten gedrückt werden, während die jeweilige Verbindung geschweißt wird, wobei eine Anzahl von Schweißunterlagen gegen die jeweiligen Spaltecken gedrückt wird.

16. Verfahren nach einem der vorhergehenden Ansprüche, wobei:
in Schritt (d) jede der Platten gereinigt und dann mit einer Epoxydfarbe mit einer kathodischen Beschichtung versehen wird.

17. Verfahren nach Anspruch 16, wobei die Beschichtung durch eine Infrarot- oder durch eine andere Oberflächenerwärmungseinrichtung ausgehärtet wird.

18. Verfahren nach Anspruch 16 oder 17, wobei die Beschichtung mit einer Beschichtungsdicke von 2,9 bis 3,5 mm aufgebracht wird.

19. Unteranordnung für einen doppelwandigen Schiffsrumpf, mit:
einer Anzahl von ebenen Platten (24); und
einer Anzahl von zusätzlichen Platten (54);
wobei eine erste Anzahl der zusätzlichen Platten (54) in einer ersten Reihe angeordnet ist, in welcher die einzelne Platten Seitenkante an Seitenkante in einer einzelnen Schicht nebeneinander angeordnet sind;
wobei eine zweite Anzahl der zusätzlichen Platten (54) in einer zweiten Reihe angeordnet ist, in welcher die einzelnen Platten Seitenkante an Seitenkante in einer einzelnen Schicht nebeneinander angeordnet sind; und
wobei eine Anzahl der ebenen Platten (24) in einer Reihe angeordnet ist, die sich zwischen der ersten Anzahl der zusätzlichen Platten (54) und der zweiten Anzahl der zusätzlichen Platten (54) befindet;
**dadurch gekennzeichnet**, daß jede ebene Platte (24) Verstärkungsleisten (60) aufweist, die an zumindest einer ihrer Flächen angebracht sind, um so eine Anzahl verstärkter ebener Platten (98) herzustellen;
daß die erste Reihe von zusätzlichen Platten (54) durch einzelne dieser Platten gebildet ist, welche Seitenkante an Seitenkante mit jeweils zwischenliegenden Spalten beabstandet nebeneinander angeordnet sind; und daß die zweite Reihe von zusätzlichen Platten (54) durch einzelne dieser Platten gebildet ist, welche Seitenkante an Seitenkante mit jeweils zwischenliegenden Spalten beabstandet nebeneinander angeordnet sind, derart, daß Spalte zwischen den Platten in der zweiten Reihe im wesentlichen mit den Spalten zwischen den Platten in der ersten Reihe fluchten;
daß die Reihe von verstärkten ebenen Platten (98) so angeordnet ist, daß eine Seitenkante jeder verstärkten ebenen Platte (98) gegen einen zugehörigen Spalte in der ersten Reihe zusätzlicher Platten (54) und eine gegenüberliegende Seitenkante gegen einen zugehörigen Spalt in der zweiten Reihe zusätzlicher Platten (54) anliegt; und daß Schweißverbindungen zwischen jeweils zusammengehörigen Seitenkanten der Platten an den entsprechenden Spalten vorhanden sind, wodurch die Spalte ausgefüllt und die Platten (54, 98) zu einer doppelwandigen Modul-Unteranordnung (182) verbunden werden;
wobei die Modul-Anordnung eine erste Beschichtung mit einer vollständigen, ausgehärteten Schutzschicht, die sich über die Platten (54, 98) bis zu den Schweißverbindungen erstreckt, und eine zweite Beschichtung hat, die eine ausgehärtete Nachbesserungs-Schutzschicht enthält, die sich über die Schweißverbindungen erstreckt, wobei die zweite ausgehärtete Nachbesserungs-Schutzschicht die erste, vollständige, ausgehärtete Schutzschicht in den Bereichen der Seitenkanten der Platten (54, 98) überdeckt.

20. Unteranordnung nach Anspruch 19, wobei die zusätzlichen Platten (54) gekrümmte Platten sind.

21. Unteranordnung nach Anspruch 20, wobei jede Platte (54) eine längliche Form mit einem rechteckigen Außenumfang hat, so daß sie zwei gegenüberliegende Seitenkanten, zwei gegenüberliegende Endkanten und zwei gegenüberliegende Flächen hat, die jeweils im wesentlichen zylindrisch bogenförmig gekrümmt sind, so daß sich jede gekrümmte Platte in einer Richtung konkav und in einer gegenüberliegenden Richtung konvex um eine parallel zu den Seitenkanten verlaufende Achse erstreckt.

22. Unteranordnung nach einem der Ansprüche 20 bis 21, wobei die erste Beschichtung und die zweite Beschichtung jeweils eine mit Infrarotlicht wärmeausgehärtete, leitfähige Epoxydfarbe enthalten.

23. Unteranordnung nach Anspruch 21 oder 22, wobei die Dicke der ersten Beschichtung im Bereich zwischen 2,9 und 3,5 mm und die Dicke der zweiten Beschichtung im Bereich zwischen 2,9 und 3,5 mm liegt.

24. Modul für einen doppelwandigen Schiffsrumpf, mit einer Anzahl von Unteranordnungen (182) nach Anspruch 19, 20 oder 21, die an jeweiligen Seitenkanten der außenliegenden, beschichteten zusätzlichen Platten (54) miteinander verschweißt sind, um dadurch ein in Seitenrichtung fortlaufendes Modul (212) herzustellen.

25. Längsgerichteter Mittelkörper für einen doppelwandigen Schiffsrumpf, mit einer Anzahl von Modulen (212) gemäß Anspruch 24, die jeweils eine sich quer erstreckende Trennwand (210) haben, wobei die Unteranordnungen (182) an der Umfangskante der Trennwände so miteinander verschweißt sind, daß jedes Modul an jedem Ende eine sich quer erstreckende Trennwand hat, wobei die Module jeweils an ihren Enden zu einer sich in Längsrichtung erstreckenden Reihe miteinander verschweißt sind, um dadurch für einen Tanker einen längsgerichteten doppelwandigen Mittelkörper herzustellen.

26. Doppelwandiger Schiffsrumpf, mit einem Rumpf-Bugabschnitt (232), der an einem Ende mit einem längsgerichteten Mittelkörper gemäß Anspruch 25 verbunden ist, und mit einem Rumpf-Heckabschnitt (234), der am gegenüberliegenden Ende des längsgerichteten Mittelkörpers angebracht ist, um dadurch einen doppelwandigen Schiffsrumpf (236) herzustellen.

## Revendications

1. Procédé de fabrication d'une structure modulaire pour un navire à coque double, comprenant :
(a) l'utilisation de plusieurs panneaux (24) formés de plaques planes ;
(b) l'utilisation de plusieurs panneaux (54) formés d'autres plaques ;
(c) le montage de plaques raidisseuses (60) sur lesdits panneaux (24) formés de plaques planes pour réaliser plusieurs panneaux (98) formés de plaques planes et raidies ;
(d) la réalisation d'un revêtement protecteur durci sur la totalité des surfaces de chaque panneau (54) formé d'une autre plaque et de chaque panneau (98) formé d'une plaque plane raidie pour produire des panneaux peints respectifs ;
(e) la mise en oeuvre d'une installation (136) formée d'une série de tours verticales fixées sur une fondation ;
(f) la disposition verticalement dans ladite installation, entre lesdites tours, de plusieurs premiers panneaux (54) formés desdites autres plaques peintes ;
(g) la disposition verticalement dans ladite installation, entre lesdites tours, de plusieurs seconds panneaux (54) formés desdites autres plaques peintes ;
(h) la disposition verticalement dans ladite installation de plusieurs desdits panneaux (98) formés de plaques planes peintes raidies ;
(i) le support desdits panneaux (54, 98) dans ladite installation (136) ;
(j) le soudage de joints entre les bords latéraux desdits panneaux pour assembler lesdits panneaux en un sous-ensemble modulaire à coque double (182) ;
(k) l'élimination du support de ladite installation (136) desdits panneaux dudit sous-ensemble ; et
(l) la réparation des dégâts causés à l'étape (j) audit revêtement durci.

2. Procédé selon la revendication 1, suivant lequel lesdits panneaux (54) formés desdites autres plaques sont des panneaux formés de plaques courbes.

3. Procédé selon la revendication 2, suivant lequel :
l'étape (a) comprend l'utilisation desdits plusieurs panneaux formés de plaques planes, chacun ayant une forme périphérique extérieure rectangulaire allongée de manière à comporter deux bords latéraux opposés, deux bords extrêmes opposés et deux surfaces planes opposées ;
l'étape (b) comprend l'utilisation desdits plusieurs panneaux (54) formés d'autres plaques, chacun ayant une forme périphérique extérieure rectangulaire allongée de manière à comporter deux bords latéraux opposés, deux bords extrêmes opposés et deux surfaces opposées présentant une courbure correspondante en arc de surface sensiblement cylindrique de manière que chaque panneau formé d'une plaque courbe soit concave dans un sens et convexe dans un sens opposé autour d'un axe parallèle auxdits bords latéraux ; et
l'étape (c) comprend le montage d'une série orientée longitudinalement de plaques raidisseuses (60) orientées transversalement sur au moins une surface de chaque panneau formé d'une plaque plane de manière à réaliser lesdits plusieurs panneaux (98) formés de plaques planes raidies.

4. Procédé selon l'une quelconque des revendications précédentes, suivant lequel :
l'étape (f) comprend la disposition verticalement dans ladite installation (136), entre lesdites tours, desdits plusieurs premiers panneaux (54) formés desdites autres plaques peintes et disposés en une première série dans laquelle chacun de ces panneaux individuels est disposé de manière à être contigu à distance d'un autre, bord latéral contre bord latéral, avec des intervalles respectifs entre eux, en une couche unique ;
l'étape (g) comprend la disposition verticalement dans ladite installation, entre lesdites tours, desdits plusieurs seconds panneaux (54) formés desdites autres plaques peintes et disposés en une seconde série dans laquelle certains individuels de ces panneaux sont disposés de manière à être contigus les uns des autres à distance, bord latéral contre bord latéral, avec des intervalles respectifs entre eux, en une couche unique, de manière que les intervalles situés entre lesdits panneaux de ladite seconde série soient sensiblement à l'alignement des intervalles compris entre les panneaux de ladite première série, dans le sens de l'épaisseur de ladite installation ;
l'étape (h) comprend la disposition verticalement dans ladite installation desdits plusieurs seconds panneaux formés desdites plaques planes raidies peintes et disposés en une série dans laquelle un bord latéral de chaque panneau formé d'une plaque plane raidie peinte est placé de manière à être contigu à l'un respectif desdits intervalles de ladite première série de panneaux formés d'autres plaques peintes et leur bord latéral opposé est disposé de manière à être contigu à l'un respectif desdits intervalles de chacune desdites secondes séries de panneaux formés d'autres plaques peintes ;
l'étape (i) comprend le support desdits panneaux de chacune desdites séries de panneaux par rapport à certaines respectives desdites tours de ladite installation (136);
l'étape (j) comprend le soudage de joints entre et parmi certains respectifs desdits bords latéraux de panneaux dans certains, respectifs, desdits intervalles de manière à emplir lesdits intervalles et à assembler lesdits panneaux dans ladite installation en un sous-ensemble modulaire à coque double (182) comprenant de multiples cellules (160) orientées longitudinalement, de forme transversale sensiblement rectangulaire en coupe transversale, ainsi deux extrémités latérales opposées aux emplacements auxquels les bords latéraux de certains respectifs d'extrémité desdits panneaux formés d'autres plaques peintes sont disponibles ;
l'étape (k) comprend l'élimination du support de ladite installation (136) desdits panneaux dudit sous-ensemble et l'enlèvement dudit sous-ensemble de ladite installation ; et
l'étape (l) comprend la réparation des dégâts causés à l'étape (j) audit revêtement durci de peinture aussi bien à l'extérieur dudit sous-ensemble qu'à l'intérieur desdites cellules (160), aux angles internes de certaines respectives desdites cellules.

5. Procédé selon l'une quelconque des revendications précédentes, comprenant par ailleurs :
(m) la répétition des étapes (a)-(1) pour réaliser de multiples desdits sous-ensembles (182) ; et
(n) la jonction par soudure de plusieurs desdits sous-ensembles, sur lesdits bords latéraux respectifs de certains respectifs d'extrémité desdits panneaux formés d'autres plaques peintes afin de réaliser ainsi un module tubulaire latéralement continu (212) ayant deux extrémités longitudinalement opposées.

6. Procédé selon la revendication 5, suivant lequel :
l'étape (n) comprend par ailleurs l'utilisation d'une cloison (210) orientée transversalement et l'assemblage par soudure de chaque sous-ensemble (182), à l'une de ses extrémités, à la périphérie autour de ladite cloison tout en joignant par soudure lesdits sous-ensembles l'un à l'autre de manière que chaque module (212) comporte une cloison transversale placée à l'une de ses extrémités.

7. Procédé suivant la revendication 6, comprenant par ailleurs :
(o) la répétition des étapes (m) et (n) pour réaliser plusieurs modules (212) dont chacun comprend une cloison transversale (210) placée à l'une de ses extrémités ; et
(p) la jonction par soudure d'une succession desdits modules les uns aux autres bout à bout en une série orientée longitudinalement de manière à réaliser un corps central longitudinal à coque double (244) d'un navire citerne ayant deux extrémités opposées.

8. Procédé selon la revendication 7, comprenant par ailleurs :
la jonction d'une partie avant de navire (232) à une extrémité dudit corps central longitudinal et d'une partie arrière de navire (234) à une extrémité opposée dudit corps central longitudinal (224) afin de réaliser ainsi un navire à coque double (236).

9. Procédé selon l'une quelconque des revendications précédentes, suivant lequel :
l'étape (a) comprend l'utilisation de multiples plaques planes brutes d'acier et le découpage au chalumeau desdites plaques pour en ébarber les bords et réaliser ainsi lesdits panneaux (24) formés de plaques planes.

10. Procédé selon la revendication 2 ou selon l'une quelconque des revendications 3 à 9 lorsqu'elle est dépendante de la revendication 2, suivant lequel :
l'étape (b) comprend l'utilisation de plusieurs plaques planes brutes d'acier, le cintrage desdites plaques planes brutes autour d'un axe longitudinal pour leur conférer une courbure et le découpage au chalumeau des plaques brutes courbes résultantes pour en ébarber les bords et ainsi réaliser lesdits panneaux (54) formés de plaques courbes.

11. Procédé selon la revendication 9 ou 10, suivant lequel :
avant l'étape (c), chaque surface d'un panneau formé d'une plaque plane et sur laquelle au moins une plaque raidisseuse (60) doit être montée est nettoyée suivant un trajet respectif orienté transversalement le long de chacune de ces surfaces ; et
à l'étape (c), une plaque raidisseuse respective (60) est soudée le long des bords à l'une respective desdites surfaces d'un panneau respectif (24) formé d'une dite plaque plane, sur l'un respectif desdits trajets nettoyés.

12. Procédé selon la revendication 11, suivant lequel chacune desdits trajets nettoyés est réalisé par meulage d'une bande respective de ladite surface respective du panneau respectif (24) formé d'une dite plaque plane.

13. Procédé selon la revendication 10 ou la revendication 11 ou 12, lorsqu'elle inclut les caractéristiques de la revendication 10, suivant lequel :
à l'étape (b), ledit cintrage est exécuté par serrage de manière coordonnée de chaque plaque plane brute respective contre un gabarit convexe à l'aide de plusieurs plateaux d'une presse présentant une courbure concave et déplacés de manière coordonnée.

14. Procédé selon l'une quelconque des revendications précédentes, suivant lequel :
l'étape (i) comprend la pose contre et le blocage de parties de certaines respectives des surfaces desdits panneaux contre des éléments de vérin montés sur lesdites tours.

15. Procédé selon l'une quelconque des revendications précédentes, suivant lequel :
l'étape (j) comprend le soudage à l'arc sous gaz desdits joints à l'aide de têtes de soudage se déplaçant vers le haut tout en supportant les bords marginaux des panneaux respectifs le long desdits intervalles respectifs situés entre les panneaux et en soudant le joint respectif à l'aide de plusieurs barres de soutien poussées dans les angles respectifs des intervalles.

16. Procédé selon l'une quelconque des revendications précédentes, suivant lequel :
à l'étape (d), chaque panneau est nettoyé et ensuite revêtu d'une peinture époxy à l'aide d'un courant cathodique.

17. Procédé selon la revendication 16, suivant lequel le revêtement est durci par infrarouges ou par un autre moyen de chauffage d'une surface.

18. Procédé selon la revendication 16 ou 17, suivant lequel le revêtement est déposé à une épaisseur de revêtement de 2,9 à 3,5 mm d'épaisseur.

19. Sous-ensemble d'un navire à coque double, comprenant :
plusieurs panneaux (24) formés de plaques planes ; et
plusieurs panneaux (54) formés d'autres plaques ; de multiples premiers desdits panneaux (54) formés d'autres plaques étant disposés en une première série dans laquelle certains, individuels de ces panneaux sont contigus les uns des autres, bord latéral contre bord latéral, en une couche unique ;
plusieurs seconds desdits panneaux (54) formés d'autres plaques étant disposés en une seconde série dans laquelle certains, individuels, de ces panneaux sont contigus les uns des autres, bord latéral contre bord latéral, en une couche unique ; et
plusieurs desdits panneaux (24) formés de plaques planes étant disposés en une série placée entre les plusieurs premiers desdits panneaux (54) formés d'autres plaques et les plusieurs seconds desdits panneaux (54) formés d'autres plaques ;
caractérisé en ce que chaque panneau (24) formé d'une plaque plane comprend des plaques raidisseuses (60) montées sur au moins l'une de leurs surfaces afin de réaliser ainsi plusieurs panneaux (98) formés de plaques planes raidies ;
ladite première série de panneaux (54) formés d'autres plaques étant disposée de manière que certains, individuels, de ces panneaux soient contigus à distance les uns des autres, bord latéral contre bord latéral, avec des intervalles respectifs entre eux ; et ladite seconde série de panneaux (54) formés d'autres plaques étant disposée de manière que certains individuels de ces panneaux soient contigus à distance les uns des autres, bord latéral contre bord latéral, avec des intervalles respectifs entre eux, d'une manière telle que les intervalles situés entre les panneaux de ladite seconde série soient sensiblement à l'alignement des intervalles situés entre les panneaux de ladite première série ;
ladite série de panneaux (98) formés de plaques planes raidie étant disposée de manière qu'un bord latéral de chaque panneau (98) formé d'une plaque plane raidie soit juxtaposé à l'un, respectif, desdits intervalles de ladite première série de panneaux (54) formés d'autres plaques et que leur bord latéral opposé soit contigu à l'un, respectif, desdits intervalles de chacune desdites secondes séries de panneaux (54) formés d'autres plaques ; des joints de soudure étant réalisés entre et parmi certains respectifs desdits bords latéraux de panneaux dans certains, respectifs, desdits intervalles de manière à remplir lesdits intervalles et à assembler desdits panneaux (54, 98) en un sous-ensemble modulaire (182) à coque double ;
ladite structure modulaire ayant un premier revêtement consistant en un revêtement protecteur durci placé sur la totalité de leurs surfaces et se prolongeant sur lesdits panneaux (54, 98) jusqu'auxdits joints de soudure, et un second revêtement consistant en un revêtement protecteur durci de rehaut disposé sur lesdits joints de soudure, ledit second revêtement protecteur durci de rehaut recouvrant ledit premier revêtement protecteur durci, placé sur la totalité des surfaces, dans la région desdits bords latéraux desdits panneaux (54, 98).

20. Sous-ensemble selon la revendication 19, dans lequel lesdits panneaux (54) formés d'autres plaques sont des panneaux formés de plaques courbes.

21. Sous-ensemble selon la revendication 20, dans lequel chaque panneau (54) formé d'une plaque a une forme périphérique extérieure rectangulaire allongée de manière qu'il comporte deux bords latéraux opposés, deux bords extrêmes opposés et deux surfaces opposées de manière correspondante courbes, sensiblement en arc d'une surface cylindrique, de sorte que chaque panneau formé d'une plaque courbe est concave dans un sens et concave dans le sens opposé autour d'un axe parallèle auxdits bords latéraux.

22. Sous-ensemble selon l'une ou l'autre des revendications 20 et 21, dans lequel chacun desdits premier revêtement et second revêtement consiste en une peinture époxy conductrice, durcie à la chaleur par infrarouges.

23. Sous-ensemble selon l'une ou l'autre des revendications 21 ou 22, dans lequel l'épaisseur du premier revêtement est de l'ordre de 2,9 à 3,5 mm d'épaisseur et l'épaisseur du second revêtement est de l'ordre de 2,9 à 3,5 mm d'épaisseur.

24. Module destiné à un navire à coque double consistant en plusieurs sous-ensembles (182) selon la revendication 19, 20 ou 21 soudés ensemble sur lesdits bords latéraux respectifs de certains, respectifs, d'extrémité desdits panneaux peints (54) formés d'autres plaques, de manière à constituer un module latéralement continu (212).

25. Corps longitudinal central d'un navire à coque double consistant en plusieurs modules (212) selon la revendication 24 et dont chacun comporte une cloison transversale (210), lesdits sous-ensembles (182) étant assemblés les uns aux autres par soudage à la circonférence autour desdites cloisons, de manière que chaque module comporte une cloison transversale se trouvant à l'une de ses extrémités, lesdits modules étant soudés les uns aux autres en une succession de modules soudés les uns aux autres bout à bout en une série orientée longitudinalement, de manière à constituer un corps central longitudinal de navire-citerne à coque double.

26. Navire à coque double comprenant une partie de l'avant du navire (232) jointe à une extrémité d'un corps central longitudinal selon la revendication 25, ainsi qu'une partie arrière de navire (234) jointe à une extrémité opposée dudit corps central longitudinal de manière à constituer ainsi un navire à coque double (236).
